(19) Europäisches Patentamt
European Patent Office
Office européen des brevets

(11) EP 4 775 599 A1

(12) **EUROPEAN PATENT APPLICATION**
published in accordance with Art. 153(4) EPC

(43) Date of publication:
**15.07.2026 Bulletin 2026/29**

(21) Application number: **24872604.4**

(22) Date of filing: **30.09.2024**

(51) International Patent Classification (IPC):
***C08F 2/16*** (2006.01) ***C08F 2/00*** (2006.01)
***C08F 6/10*** (2006.01) ***C08F 14/26*** (2006.01)
***C08F 16/24*** (2006.01)

(52) Cooperative Patent Classification (CPC):
**C08F 2/00; C08F 2/16; C08F 6/10; C08F 14/26; C08F 16/24**

(86) International application number:
**PCT/JP2024/035013**

(87) International publication number:
**WO 2025/070825 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023 JP 2023170585**

(71) Applicant: **Daikin Industries, Ltd.**
**Osaka-shi, Osaka 530-0001 (JP)**

(72) Inventors:
- **TANAKA, Takayuki**
**Osaka-Shi, Osaka 530-0001 (JP)**
- **SATO, Hiroyuki**
**Osaka-Shi, Osaka 530-0001 (JP)**
- **TSUNODA, Yuko**
**Osaka-Shi, Osaka 530-0001 (JP)**
- **MIYAMOTO, Masayoshi**
**Osaka-Shi, Osaka 530-0001 (JP)**
- **KATO, Taketo**
**Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **METHOD FOR PRODUCING FLUOROPOLYMER**

(57) Provided is a method for producing a fluoropolymer, the method comprising polymerizing a fluoromonomer in the presence of a polymerization initiator and an aqueous medium in a reactor to prepare a composition containing the aqueous medium and the fluoropolymer, and bringing the composition into contact with a gas containing at least oxygen.



Processed by Luminess, 75001 PARIS (FR)

## Description

### TECHNICAL FIELD

The present disclosure relates to a method for producing a fluoropolymer.

### BACKGROUND ART

Patent Document 1 discloses a method for producing polytetrafluoroethylene, the method comprising bringing tetrafluoroethylene into contact with an aqueous medium containing a water-soluble polymerization initiator to carry out a polymerization reaction, recovering unreacted tetrafluoroethylene after the polymerization reaction, and washing the contents with an inert gas.

### RELATED ART

### PATENT DOCUMENT

Patent Document 1: Japanese Patent Publication No. S48-034399

### SUMMARY OF THE INVENTION

### PROBLEM TO BE SOLVED BY THE INVENTION

An object of the present disclosure is to provide a method for producing a fluoropolymer, wherein a fluoropolymer composition obtained by polymerization is treated by a novel method.

### MEANS FOR SOLVING THE PROBLEM

The present disclosure provides a method for producing a fluoropolymer, the method comprising polymerizing a fluoromonomer in the presence of a polymerization initiator and an aqueous medium in a reactor to prepare a composition containing the aqueous medium and the fluoropolymer, and bringing the composition into contact with a gas containing at least oxygen.

### EFFECTS OF INVENTION

The present disclosure is capable of providing a method for producing a fluoropolymer, wherein a fluoropolymer composition obtained by polymerization is treated by a novel method.

### DESCRIPTION OF EMBODIMENTS

Before describing the present disclosure in detail, some terms used in the present disclosure will now be defined or explained.

Herein, the fluororesin is a partially crystalline fluoropolymer, and is a fluoroplastic. The fluororesin has a melting point and thermoplasticity, and may be either melt-fabricable or non melt-processible.

The term "melt-fabricable" as used herein means that a polymer has an ability to be processed in a molten state using a conventional processing device such as an extruder or an injection molding machine. Accordingly, a melt-fabricable fluororesin usually has a melt flow rate of 0.01 to 500 g/10 min as measured by the measurement method described below.

Herein, the fluoroelastomer is an amorphous fluoropolymer. Being "amorphous" means that the melting peak ($\Delta H$) appearing in differential scanning calorimetry (DSC) (a temperature-increasing rate of 10°C/min) or differential thermal analysis (DTA) (a temperature-increasing rate of 10°C/min) of the fluoropolymer has a size of 4.5 J/g or less. The fluoroelastomer exhibits elastomeric characteristics by being crosslinked. The elastomeric characteristics mean characteristics by which the polymer can be stretched and can retain its original length when the force required to stretch the polymer is no longer applied.

The monomer that provides a crosslinking site is a monomer (a cure site monomer) having a crosslinkable group that provides a fluoropolymer with a crosslinking site for forming a crosslink with a curing agent.

Herein, polytetrafluoroethylene (PTFE) is preferably a fluoropolymer having a tetrafluoroethylene unit content of 99 mol% or more based on all polymerization units.

Herein, the fluororesin (excluding polytetrafluoroethylene) and the fluoroelastomer are each preferably a fluoropolymer having a tetrafluoroethylene unit content of less than 99 mol% based on all polymerization units.

Herein, the content of each monomer constituting the fluoropolymer can be calculated by any suitable combination of NMR, FT-IR, elemental analysis, and X-ray fluorescence analysis according to the type of monomer.

Herein, the "organic group" means a group containing one or more carbon atoms or a group formed by removing one hydrogen atom from an organic compound. The organic group is preferably an alkyl group optionally having one or more substituents.

Herein, a range indicated by endpoints includes all numerical values within the range (for example, a range of 1 to 10 includes 1.4, 1.9, 2.33, 5.75, 9.98, and the like).

Herein, the phrase "at least one" includes all numerical values equal to or greater than 1 (for example, at least 2, at least 4, at least 6, at least 8, at least 10, at least 25, at least 50, at least 100, and the like).

Hereinafter, specific embodiments of the present disclosure will now be described in detail, but the present disclosure is not limited to the following embodiments.

A composition obtained by polymerizing a fluoromonomer may contain, other than a fluoropolymer, a fluorine-containing compound having a hydrophilic group.

In the production method of the present disclosure, the fluoropolymer is polymerized to thereby prepare a composition containing an aqueous medium and the fluoropolymer, and then the composition is brought into contact with a gas containing at least oxygen. The use of such a production method makes it possible to produce a fluoropolymer in which the content of a fluorine-containing compound having a hydrophilic group is small.

That is to say, the present disclosure relates to a method for producing a fluoropolymer, the method comprising polymerizing a fluoromonomer in the presence of a polymerization initiator and an aqueous medium in a reactor to prepare a composition containing the aqueous medium and the fluoropolymer, and bringing the composition into contact with a gas containing at least oxygen.

Hereinafter, the steps and the materials used in the steps will now be described in detail.

(Polymerization of fluoromonomer)

In the production method of the present disclosure, a fluoromonomer is polymerized in the presence of a polymerization initiator and an aqueous medium in a reactor to prepare a composition containing the aqueous medium and the fluoropolymer.

The polymerization of a fluoromonomer can be carried out by charging a reactor with a fluoromonomer, an aqueous medium, and optionally other additives, stirring the contents of the reactor, maintaining the reactor at a predetermined polymerization temperature, and adding a predetermined amount of a polymerization initiator to thereby initiate the polymerization reaction. After the initiation of the polymerization reaction, components such as a fluoromonomer, a polymerization initiator, and a chain transfer agent may additionally be added depending on the purpose.

The method for polymerizing a fluoromonomer is not limited, and emulsion polymerization or suspension polymerization is preferable. When using emulsion polymerization, a surfactant such as a fluorine-containing surfactant may be added to the reactor.

In suspension polymerization, suspension-polymerized particles are produced by polymerizing a fluoromonomer in an aqueous medium usually without using a surfactant or using a small amount of a surfactant. For example, when tetrafluoroethylene used as a fluoromonomer is suspension-polymerized to produce suspension-polymerized particles of polytetrafluoroethylene, the resulting suspension-polymerized particles can be recovered and dried to thereby give a molding powder of polytetrafluoroethylene.

In emulsion polymerization, a fluoromonomer is usually polymerized in an aqueous medium in the presence of a surfactant to give an aqueous dispersion in which primary particles of a fluoropolymer are stably dispersed in the aqueous medium. For example, when tetrafluoroethylene used as a fluoromonomer is emulsion-polymerized to give an aqueous dispersion in which primary particles of polytetrafluoroethylene are stably dispersed in the aqueous medium, primary particles in the resulting aqueous dispersion can be coagulated and dried to give a fine powder of polytetrafluoroethylene.

(Polymerization initiator)

The polymerization initiator for use in the polymerization of a fluoromonomer is not limited as long as it can generate radicals within the polymerization temperature range, and known oil-soluble and/or water-soluble polymerization initiators can be used. Moreover, the polymerization initiator can also be combined with a reducing agent or the like to form a redox agent and initiate polymerization. The concentration of the polymerization initiator is suitably determined according to the type of monomer, the target molecular weight of the fluoropolymer, and the reaction rate.

The polymerization initiator may be an oil-soluble radical polymerization initiator or a water-soluble radical polymerization initiator.

The oil-soluble radical polymerization initiator may be a known oil-soluble peroxide, and representative examples include a dialkyl peroxycarbonate such as diisopropyl peroxydicarbonate and di-sec-butyl peroxydicarbonate; a peroxy ester such as t-butyl peroxyisobutyrate and t-butyl peroxypivalate; and a dialkyl peroxide such as di-t-butyl peroxide, as well as a di[perfluoro (or fluorochloro) acyl]peroxide such as di(ω-hydro-dodecafluoroheptanoyl)peroxide, di(ω-hydro-tetradecafluorooctanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl) peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples include ammonium salts, potassium salts, and sodium salts of persulphuric acid, perboric acid, perchloric acid, perphosphoric acid, and percarbonic acid, organic peroxides of disuccinic acid peroxide and diglutaric acid peroxide, t-butyl permaleate, and t-butyl hydroperoxide. A reducing agent such as a sulfite may be contained together, and the amount thereof may be 0.1 to 20 times the amount of the peroxide.

For example, when carrying out the polymerization at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of the persulfates include ammonium persulfate and potassium persulfate. Examples of the sulfites include sodium sulfite and ammonium sulfite. In order to increase the decomposition rate of the initiator, the combination of the redox initiator preferably contains a copper salt or an iron salt. The copper salt may be copper(II) sulfate, and the iron salt may be iron(II) sulfate.

Examples of the redox initiator include potassium permanganate/oxalic acid, potassium permanganate/ammonium oxalate, ammonium persulfate/bisulfite/iron sulfate, manganese triacetate/oxalic acid, cerium ammonium nitrate/oxalic acid, and bromate/bisulfite, and potassium permanganate/oxalic acid is preferable. When using a redox initiator, one of an oxidizing agent and a reducing agent may be introduced into a polymerization tank in advance, and then the other may be added continuously or intermittently to start the polymerization. For example, when using potassium permanganate/oxalic acid, preferably, a polymerization tank is charged with oxalic acid, and potassium permanganate is continuously added thereto.

The polymerization initiator may be added in any amount, and the initiator in an amount that does not significantly decrease the polymerization rate (e.g., concentration of several ppm in water) or more may be added at once in the initial stage of polymerization, or may be added successively or continuously. The upper limit is within a range where the reaction temperature is allowed to increase while the polymerization reaction heat is removed through the device surface, and the upper limit is more preferably within a range where the polymerization reaction heat can be removed through the device surface.

By adding a decomposer when polymerizing the fluoromonomer, the concentration of radicals during polymerization can be regulated. Examples of the decomposer include sulfite, bisulfite, bromate, diimine, oxalic acid, copper salts, and iron salts. Examples of the sulfite include sodium sulfite and ammonium sulfite. The copper salt may be copper(II) sulfate, and the iron salt may be iron(II) sulfate. The amount of the decomposer added is in a range of 25 to 300% by mass based on the amount of the oxidizing agent combined as a polymerization initiator (a redox initiator). The amount of the decomposer added is preferably 25 to 150% by mass, and more preferably 50 to 100% by mass. Further, the decomposer is preferably added after 5% by mass of all fluoromonomer consumed in the polymerization reaction is polymerized, and more preferably after 10% by mass is polymerized. The amount of the decomposer added is preferably an amount corresponding to 0.1 to 20 ppm by mass and more preferably an amount corresponding to 3 to 10 ppm by mass of the mass of the aqueous medium used.

(Aqueous medium)

The aqueous medium for use in the polymerization of a fluoromonomer is a reaction medium in which the polymerization is carried out, and means a liquid containing water. The aqueous medium is not limited as long as it contains water, and may be an aqueous medium containing water and, for example, a fluorine-free organic solvent such as ether or ketone, and/or a fluorine-containing organic solvent having a boiling point of 40°C or lower.

The aqueous medium is preferably an aqueous medium solely containing water or an aqueous medium solely containing water and a fluorine-free organic solvent, and is more preferably an aqueous medium solely containing water because the polymerization of a fluoromonomer can proceed smoothly.

The moisture content in the aqueous medium is preferably 90% or more, more preferably 95% or more, even more preferably 99.0% or more, yet more preferably 99.5% or more, and particularly preferably 99.9% or more, and may be 100% based on the mass of the aqueous medium because the polymerization of a fluoromonomer can proceed smoothly.

(Fluoromonomer)

The fluoromonomer for use in the polymerization has at least one fluorine atom and at least one double bond. The fluoromonomer is preferably at least one selected from the group consisting of tetrafluoroethylene [TFE], hexafluoropropylene [HFP], chlorotrifluoroethylene [CTFE], vinyl fluoride, vinylidene fluoride [VdF], trifluoroethylene, fluoroalkyl vinyl ether, fluoroalkyl ethylene, fluoroalkyl allyl ether, trifluoropropylene, pentafluoropropylene, trifluorobutene, tetrafluoroisobutene, hexafluoroisobutene, fluoromonomers represented by general formula (100): $CHX^{101}=CX^{102}Rf^{101}$ (wherein one of $X^{101}$ and $X^{102}$ is H, the other is F, and $Rf^{101}$ is a linear or branched fluoroalkyl group having 1 to 12 carbon atoms), fluorinated vinyl heterocyclic compounds, and monomers that provide a crosslinking site.

In one embodiment of the production method of the present disclosure, the fluoromonomer may be at least TFE. In one embodiment of the production method of the present disclosure, the fluoromonomer may be at least fluoroalkyl vinyl ether such as perfluoro(alkyl vinyl ether). In one embodiment of the production method of the present disclosure, the fluoromonomer may be at least TFE and perfluoro(alkyl vinyl ether).

Fluoroalkyl vinyl ether [FAVE] is preferably at least one selected from the group consisting of, for example, a fluoromonomer represented by:

General formula (110): $CF_2=CF\text{-}ORf^{111}$

wherein $Rf^{111}$ represents a perfluoro organic group; a fluoromonomer represented by:

General formula (120): $CF_2=CF\text{-}OCH_2\text{-}Rf^{121}$

wherein $Rf^{121}$ is a perfluoroalkyl group having 1 to 5 carbon atoms; a fluoromonomer represented by:

General formula (130): $CF_2=CFOCF_2ORf^{131}$

wherein $Rf^{131}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and 1 to 3 oxygen atoms; a fluoromonomer represented by:

General formula (140): $CF_2=CFO(CF_2CF(Y^{141})O)_m(CF_2)_nF$

wherein $Y^{141}$ represents a fluorine atom or a trifluoromethyl group, m is an integer of 1 to 4, and n is an integer of 1 to 4; and a fluoromonomer represented by:

General formula (150): $CF_2=CF\text{-}O\text{-}(CF_2CFY^{151}\text{-}O)_n\text{-}(CFY^{152})_m\text{-}A^{151}$

wherein $Y^{151}$ represents a fluorine atom, a chlorine atom, an - $SO_2F$ group, or a perfluoroalkyl group, the perfluoroalkyl group may contain etheric oxygen and an $-SO_2F$ group, n represents an integer of 0 to 3, n $Y^{151}$ groups may be the same or different, $Y^{152}$ represents a fluorine atom, a chlorine atom, or an $-SO_2F$ group, m represents an integer of 1 to 5, m $Y^{152}$ groups may be the same or different, $A^{151}$ represents $-SI_2X^{151}$, $-COZ^{151}$, or - $POZ^{152}Z^{153}$, $X^{151}$ represents F, Cl, Br, I, $-OR^{151}$, or $-NR^{152}R^{153}$, $Z^{151}$, $Z^{152}$, and $Z^{153}$ are the same or different, and represent - $NR^{154}R^{155}$ or $-OR^{156}$, and $R^{151}$, $R^{152}$, $R^{153}$, $R^{154}$, $R^{155}$, and $R^{156}$ are the same or different, and represent H, ammonium, an alkali metal, an alkyl group optionally containing a fluorine atom, an aryl group, or a sulfonyl-containing group.

Herein, the "perfluoro organic group" means an organic group obtained by replacing all hydrogen atoms bonded to the carbon atoms with fluorine atoms. The perfluoro organic group may have ether oxygen.

Examples of the fluoromonomer represented by general formula (110) include fluoromonomers in which $Rf^{111}$ is a perfluoroalkyl group having 1 to 10 carbon atoms. The perfluoroalkyl group preferably has 1 to 5 carbon atoms.

Examples of the perfluoro organic group in general formula (110) include a perfluoromethyl group, a perfluoroethyl group, a perfluoropropyl group, a perfluorobutyl group, a perfluoropentyl group, and a perfluorohexyl group.

Examples of the fluoromonomer represented by general formula (110) include those represented by general formula (110) wherein $Rf^{111}$ is a perfluoro(alkoxyalkyl) group having 4 to 9 carbon atoms; those in which $Rf^{111}$ is a group represented by the following formula:

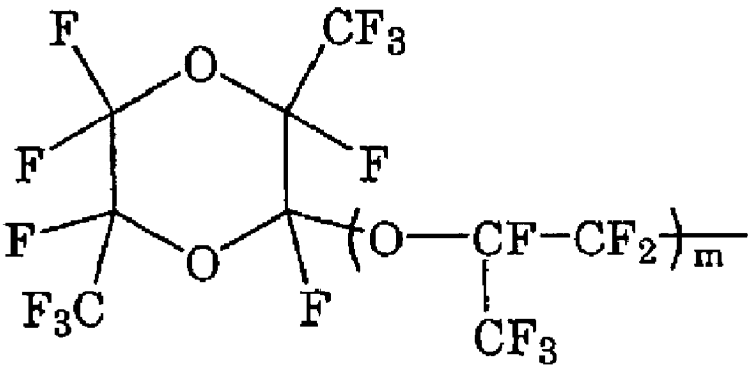

wherein m represents an integer of 0 or 1 to 4; and those wherein $Rf^{111}$ is a group represented by the following formula:

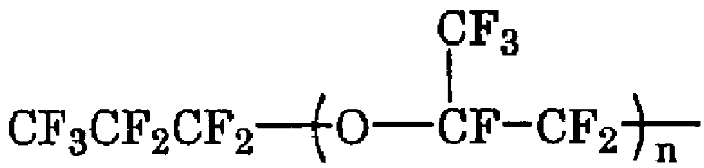

wherein n represents an integer of 1 to 4.

In particular, the fluoromonomer represented by general formula (110) is preferably a fluoromonomer represented by:

General formula (160): $CF_2=CF-ORf^{161}$

wherein $Rf^{161}$ is a perfluoroalkyl group having 1 to 10 carbon atoms. $Rf^{161}$ is preferably a perfluoroalkyl group having 1 to 5 carbon atoms.

Fluoroalkyl vinyl ether is preferably at least one selected from the group consisting of fluoromonomers represented by general formulae (160), (130), and (140).

The fluoromonomer represented by general formula (160) is generally referred to as perfluoro(alkyl vinyl ether). The fluoromonomer represented by general formula (160) is preferably at least one selected from the group consisting of perfluoro(methyl vinyl ether), perfluoro(ethyl vinyl ether), and perfluoro(propyl vinyl ether), and more preferably at least one selected from the group consisting of perfluoro(methyl vinyl ether) and perfluoro(propyl vinyl ether).

The fluoromonomer represented by general formula (130) is preferably at least one selected from the group consisting of $CF_2=CFOCF_2OCF_3$, $CF_2=CFOCF_2OCF_2CF_3$, and $CF_2=CFOCF_2OCF_2CF_2OCF_3$.

The fluoromonomer represented by general formula (140) is preferably at least one selected from the group consisting of $CF_2=CFOCF_2CF(CF_3)O(CF_2)_3F$, $CF_2=CFO(CF_2CF(CF_3)O)_2(CF_2)_3F$, and $CF_2=CFO(CF_2CF(CF_3)O)_2(CF_2)_2F$.

The fluoromonomer represented by general formula (150) is preferably at least one selected from the group consisting of $CF_2=CFOCF_2CF_2SO_2F$, $CF_2=CFOCF_2CF(CF_3)OCF_2CF_2SO_2F$, $CF_2=CFOCF_2CF(CF_2CF_2SO_2F)OCF_2CF_2SO_2F$, and $CF_2=CFOCF_2CF(SO_2F)_2$.

The fluoromonomer represented by general formula (100) is preferably a fluoromonomer in which $Rf^{101}$ is a linear fluoroalkyl group, and more preferably a fluoromonomer in which $Rf^{101}$ is a linear perfluoroalkyl group. The number of carbon atoms in $Rf^{101}$ is preferably 1 to 6. Examples of the fluoromonomer represented by general formula (100) include $CH_2=CFCF_3$, $CH_2=CFCF_2CF_3$, $CH_2=CFCF_2CF_2CF_3$, $CH_2=CFCF_2CF_2CF_2H$, $CH_2=CFCF_2CF_2CF_2CF_3$, $CHF=CHCF_3$ (E-form), and $CHF=CHCF_3$ (Z-form), and, in particular, 2,3,3,3-tetrafluoropropylene represented by $CH_2=CFCF_3$ is preferable.

Fluoroalkyl ethylene is preferably fluoroalkyl ethylene represented by:

General formula (170): $CH_2=CH-(CF_2)_n-X^{171}$

wherein $X^{171}$ is H or F, and n is an integer of 3 to 10; and more preferably at least one selected from the group consisting of $CH_2=CH-C_4F_9$ and $CH_2=CH-C_6F_{13}$.

Fluoroalkyl allyl ether is, for example, a fluoromonomer represented by:

General formula (180): $CF_2=CF-CF_2-ORf^{111}$

wherein $Rf^{111}$ represents a perfluoro organic group.

$Rf^{111}$ in general formula (180) is the same as $Rf^{111}$ in general formula (110). $Rf^{111}$ is preferably a perfluoroalkyl group having 1 to 10 carbon atoms or a perfluoroalkoxyalkyl group having 1 to 10 carbon atoms. Fluoroalkyl allyl ether represented by general formula (180) is preferably at least one selected from the group consisting of $CF_2$=CF-$CF_2$-O-$CF_3$, $CF_2$=CF-$CF_2$-O-$C_2F_5$, $CF_2$=CF-$CF_2$-O-$C_3F_7$, and $CF_2$=CF-$CF_2$-O-$C_4F_9$, more preferably at least one selected from the group consisting of $CF_2$=CF-$CF_2$-O-$C_2F_5$, $CF_2$=CF-$CF_2$-O-$C_3F_7$, and $CF_2$=CF-$CF_2$-O-$C_4F_9$, and even more preferably $CF_2$=CF-$CF_2$-O-$CF_2CF_2CF_3$.

Examples of the fluorinated vinyl heterocyclic compounds include fluorinated vinyl heterocyclic compounds represented by general formula (230):

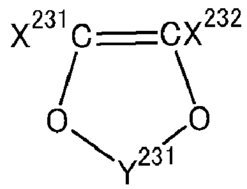

wherein $X^{231}$ and $X^{232}$ are each independently F, Cl, a methoxy group, or a fluorinated methoxy group; and $Y^{231}$ is formula $Y^{232}$ or formula $Y^{233}$:

-FC=CF- ($Y^{232}$)

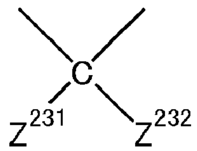

($Y^{233}$)

wherein $Z^{231}$ and $Z^{232}$ are each independently F or a fluorinated alkyl group having 1 to 3 carbon atoms.

The monomer that provides a crosslinking site is preferably at least one selected from the group consisting of a fluoromonomer represented by:

General formula (180) : $CX^{181}_2=CX^{182}-R_f^{181}CHR^{181}X^{183}$

wherein $X^{181}$ and $X^{182}$ are each independently a hydrogen atom, a fluorine atom, or $CH_3$, $R_f^{181}$ is a fluoroalkylene group, a perfluoroalkylene group, a fluoro(poly)oxyalkylene group, or a perfluoro(poly)oxyalkylene group, $R^{181}$ is a hydrogen atom or $CH_3$, and $X^{183}$ is an iodine atom or a bromine atom; a fluoromonomer represented by:

General formula (190): $CX^{191}_2=CX^{192}-R_f^{191}X^{193}$

wherein $X^{191}$ and $X^{192}$ are each independently a hydrogen atom, a fluorine atom, or $CH_3$, $R_f^{191}$ is a fluoroalkylene group, a perfluoroalkylene group, a fluoropolyoxyalkylene group, or a perfluoropolyoxyalkylene group, and $X^{193}$ is an iodine atom or a bromine atom; a fluoromonomer represented by:

General formula (200): $CF_2=CFO(CF_2CF(CF_3)O)_m(CF_2)_n-X^{201}$

wherein m is an integer of 0 to 5, n is an integer of 1 to 3, and $X^{201}$ is a cyano group, a carboxyl group, an alkoxycarbonyl group, an iodine atom, a bromine atom, or -$CH_2I$; a fluoromonomer represented by:

General formula (210): $CH_2=CFCF_2O(CF(CF_3)CF_2O)_m(CF(CF_3))_n-X^{211}$

wherein m is an integer of 0 to 5, n is an integer of 1 to 3, and $X^{211}$ is a cyano group, a carboxyl group, an alkoxycarbonyl group, an iodine atom, a bromine atom, or -$CH_2OH$; and a monomer represented by:

General formula (220) : $CR^{221}R^{222}=CR^{223}-Z^{221}-CR^{224}=CR^{225}R^{226}$

wherein $R^{221}$, $R^{222}$, $R^{223}$, $R^{224}$, $R^{225}$, and $R^{226}$ are each independently a hydrogen atom or an alkyl group having 1 to 5 carbon atoms, and $Z^{221}$ is a linear or branched alkylene group having 1 to 18 carbon atoms and optionally containing an oxygen atom, a cycloalkylene group having 3 to 18 carbon atoms, an at least partially fluorinated alkylene or oxyalkylene group having 1 to 10 carbon atoms, or a (per)fluoropolyoxyalkylene group having a molecular weight of 500 to 10,000 and represented by:

$$-(Q)_p-CF_2O-(CF_2CF_2O)_m(CF_2O)_n-CF_2-(Q)_p-$$

wherein Q is an alkylene group or an oxyalkylene group, p is 0 or 1, and m/n is 0.2 to 5.

$X^{183}$ and $X^{193}$ are each preferably an iodine atom. $R_f^{181}$ and $R_f^{191}$ are each preferably a perfluoroalkylene group having 1 to 5 carbon atoms. $R^{181}$ is preferably a hydrogen atom. $X^{201}$ is preferably a cyano group, an alkoxycarbonyl group, an iodine atom, a bromine atom, or $-CH_2I$. $X^{211}$ is preferably a cyano group, an alkoxycarbonyl group, an iodine atom, a bromine atom, or $-CH_2OH$.

The monomer that provides a crosslinking site is preferably at least one selected from the group consisting of $CF_2=CFOCF_2CF(CF_3)OCF_2CF_2CN$, $CF_2=CFOCF_2CF(CF_3)OCF_2CF_2COOH$, $CF_2=CFOCF_2CF(CF_3)OCF_2CF_2CH_2I$, $CF_2=CFOCF_2CF_2CH_2I$, $CH_2=CFCF_2OCF(CF_3)CF_2OCF(CF_3)CN$, $CH_2=CFCF_2OCF(CF_3)CF_2OCF(CF_3)COOH$, $CH_2=CFCF_2OCF(CF_3)CF_2OCF(CF_3)CH_2OH$, $CH_2=CHCF_2CF_2I$, $CH_2=CH(CF_2)_2CH=CH_2$, $CH_2=CH(CF_2)_6CH=CH_2$, and $CF_2=CFO(CF_2)_5CN$, and more preferably at least one selected from the group consisting of $CF_2=CFOCF_2CF(CF_3)OCF_2CF_2CN$ and $CF_2=CFOCF_2CF_2CH_2I$.

In the polymerization, the above fluoromonomer and a fluorine-free monomer may be copolymerized. Examples of the fluorine-free monomer include hydrocarbon monomers that are reactive with the fluoromonomer. Examples of the hydrocarbon monomers include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, vinyl n-butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl p-tert-butylbenzoate, vinyl cyclohexanecarboxylate, vinyl monochloroacetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; alkyl allyl esters such as ethyl allyl ester, propyl allyl ester, butyl allyl ester, isobutyl allyl ester, and cyclohexyl allyl ester; and (meth)acrylic acid esters such as methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, and vinyl methacrylate.

The fluorine-free monomer may also be a functional group-containing hydrocarbon monomer (excluding the monomer that provides a crosslinking site). Examples of the functional group-containing hydrocarbon monomer include hydroxyalkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-free monomers having a carboxyl group, such as acrylic acid, methacrylic acid, itaconic acid, succinic acid, succinic anhydride, fumaric acid, fumaric anhydride, crotonic acid, maleic acid, maleic anhydride, and perfluorobutenic acid; fluorine-free monomers having a sulfo group, such as vinylsulfonic acid; fluorine-free monomers having a glycidyl group, such as glycidyl vinyl ether and glycidyl allyl ether; fluorine-free monomers having an amino group, such as aminoalkyl vinyl ether and aminoalkyl allyl ether; fluorine-free monomers having an amide group, such as (meth)acrylamide and methylolacrylamide; and fluorine-free monomers having a nitrile group, such as acrylonitrile and methacrylonitrile.

In the polymerization, the desired fluoropolymer can be obtained by polymerizing one or more of the above fluoromonomers.

(Chain transfer agent)

In the production method of the present disclosure, the fluoromonomer can be polymerized also in the presence of a chain transfer agent. The use of a chain transfer agent enables the polymerization rate and the molecular weight to be regulated. Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The chain transfer agent may be a bromine compound or an iodine compound. The polymerization method involving a bromine compound or an iodine compound may be, for example, a method comprising polymerizing a fluoromonomer in an aqueous medium in the presence of a bromine compound or an iodine compound substantially in the absence of oxygen (an iodine transfer polymerization method). Representative examples of the bromine compound or the

iodine compound for use include compounds represented by the general formula:

$R^aI_xBr_y$

wherein x and y are each independently an integer of 0 to 2 and satisfy $1 \leq x + y \leq 2$, and $R^a$ is a saturated or unsaturated fluorohydrocarbon group or chlorofluorohydrocarbon group having 1 to 16 carbon atoms or a hydrocarbon group having 1 to 3 carbon atoms and optionally containing an oxygen atom. By using a bromine compound or an iodine compound, iodine or bromine is introduced into the polymer and functions as a crosslinking point.

Examples of the bromine compound or the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, monoiodo-monobromo substituted benzene, diiodo-monobromo substituted benzene, and (2-iodoethyl) and (2-bromoethyl)-substituted benzene. These compounds may be used singly or as a combination of one another.

Among these, 1,4-diiodoperfluorobutane, 1,6-diiodoperfluorohexane, and 2-iodoperfluoropropane are preferably used in terms of polymerization reactivity, crosslinking reactivity, and availability.

The amount of the chain transfer agent used is usually 1 to 50,000 ppm by mass and preferably 1 to 20,000 ppm by mass based on the total amount of the fluoromonomer fed. The amount of the chain transfer agent used is preferably an amount such that the chain transfer agent is completely consumed during the polymerization of the fluoromonomer and does not remain in the composition containing the fluoromonomer. Accordingly, the amount of the chain transfer agent used is more preferably 10,000 ppm by mass or less, even more preferably 5,000 ppm by mass or less, yet more preferably 1,000 ppm by mass or less, particularly preferably 500 ppm by mass or less, and most preferably 200 ppm by mass or less, based on the total amount of the fluoromonomer fed.

The chain transfer agent may be added to the reactor at once before the beginning of polymerization, may be added at once after the beginning of polymerization, may be added in multiple portions during polymerization, or may be added continuously during polymerization.

(Fluorine-containing surfactant)

A fluorine-containing surfactant may be used in the production method of the present disclosure. Irrespective of whether the polymerization method of the fluoromonomer is suspension polymerization or emulsion polymerization, a fluorine-containing surfactant can be used. In particular, the use of a fluorine-containing surfactant enables the fluoromonomer to be smoothly polymerized by emulsion polymerization. The fluorine-containing surfactant used in the polymerization of the fluoromonomer is not limited as long as it is a surfactant containing at least one fluorine atom, and conventionally known fluorine-containing surfactants can be used.

Examples of the fluorine-containing surfactant include anionic fluorine-containing surfactants. The anionic fluorine-containing surfactant may be, for example, a fluorine atom-containing surfactant having 20 or fewer carbon atoms in total in the portion excluding the anionic group.

The fluorine-containing surfactant may also be a fluorine-containing surfactant in which the molecular weight of the anionic moiety is 1,000 or less.

The "anionic moiety" means a portion of the fluorine-containing surfactant excluding the cation. For example, in the case of $F(CF_2)_{n1}COOM$ represented by formula (I), which will be described below, the anionic moiety is the "$F(CF_2)_{n1}COO$" portion.

Examples of the fluorine-containing surfactant also include fluorine-containing surfactants having a Log POW of 3.5 or less. The Log POW is a partition coefficient between 1-octanol and water, which is represented by Log P (wherein P represents the ratio between the concentration of the fluorine-containing surfactant in octanol and the concentration of the fluorine-containing surfactant in water in a phase-separated octanol/water (1:1) liquid mixture containing the fluorine-containing surfactant).

The Log POW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6% by mass $HClO_4$ solution = 1/1 (vol/vol%), flow rate: 1.0 ml/min, sample volume: 300 μL, column temperature: 40°C, detection light: UV210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application

Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

Examples of the anionic fluorine-containing surfactant include a compound represented by the following general formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group having 3 to 20 carbon atoms in which some or all of H are replaced with F, the alkylene group optionally containing one or more ether bonds in which some of H are optionally replaced with Cl; and $Y^0$ is an anionic group.

The anionic group $Y^0$ may be $-COOM$, $-SO_2M$, or $-SO_3M$, and may be $-COOM$ or $-SO_3M$.

M is H, a metal atom, $NR^7_4$, optionally substituted imidazolium, optionally substituted pyridinium, or optionally substituted phosphonium, and $R^7$ is H or an organic group.

Examples of the metal atom include alkali metals (Group 1) and alkaline earth metals (Group 2), such as Na, K, or Li.

$R^7$ may be H or a $C_{1-10}$ organic group, may be H or a $C_{1-4}$ organic group, and may be H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

$Rf^{n0}$ may be an alkylene group in which 50% or more H atoms are replaced with fluorine atoms.

Examples of the compound represented by general formula ($N^0$) include a compound represented by the following general formula ($N^1$):

$$X^{n0}\text{-}(CF_2)_{m1}\text{-}Y^0 \qquad (N^1)$$

wherein $X^{n0}$ is H, Cl, or F; m1 is an integer of 3 to 15; and $Y^0$ is as defined above;

a compound represented by the following general formula ($N^2$):

$$Rf^{n1}\text{-}O\text{-}(CF(CF_3)CF_2O)_{m2}CFX^{n1}\text{-}Y^0 \qquad (N^2)$$

wherein $Rf^{n1}$ is a perfluoroalkyl group having 1 to 5 carbon atoms; m2 is an integer of 0 to 3; $X^{n1}$ is F or $CF_3$; and $Y^0$ is as defined above;

a compound represented by the following general formula ($N^3$):

$$Rf^{n2}(CH_2)_{m3}\text{-}(Rf^{n3})_q\text{-}Y^0 \qquad (N^3)$$

wherein $Rf^{n2}$ is a partially or fully fluorinated alkyl group having 1 to 13 carbon atoms and optionally containing an ether bond and/or a chlorine atom; m3 is an integer of 1 to 3; $Rf^{n3}$ is a linear or branched perfluoroalkylene group having 1 to 3 carbon atoms, q is 0 or 1; and $Y^0$ is as defined above;

a compound represented by the following general formula ($N^4$):

$$Rf^{n4}\text{-}C\text{-}(CY^{n1}Y^{n2})_pCF_2\text{-}Y^0 \qquad (N^4)$$

wherein $Rf^{n4}$ is a linear or branched, partially or fully fluorinated alkyl group having 1 to 12 carbon atoms and optionally containing an ether bond; $Y^{n1}$ and $Y^{n2}$ are the same or different and are each independently H or F; p is 0 or 1; and $Y^0$ is as defined above; and

a compound represented by the following general formula ($N^5$):

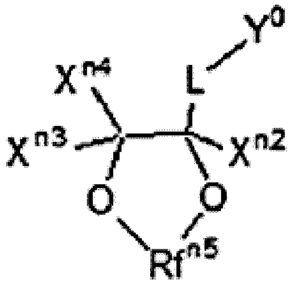

$(N^5)$

(wherein $X^{n2}$, $X^{n3}$, and $X^{n4}$ are the same or different and are each independently H, F, or a linear or branched, partially or fully fluorinated alkyl group having 1 to 6 carbon atoms and optionally containing an ether bond, $Rf^{n5}$ is a linear or branched, partially or fully fluorinated alkylene group having 1 to 3 carbon atoms and optionally containing an ether bond, L is a linking group, and $Y^0$ is as defined above, provided that the total number of carbon atoms of $X^{n2}$, $X^{n3}$, $X^{n4}$, and $Rf^{n5}$ is 18 or less).

More specific examples of the compound represented by general formula ($N^0$) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

$F(CF_2)_{n1}COOM$ (I)

wherein n1 is an integer of 3 to 14; and M is H, a metal atom, $NR^7_4$, optionally substituted imidazolium, optionally substituted pyridinium, or optionally substituted phosphonium, wherein $R^7$ is H or an organic group.

The ω-H perfluorocarboxylic acid (II) is represented by the following general formula (II):

$H(CF_2)_{n2}COOM$ (II)

wherein n2 is an integer of 4 to 15; and M is as defined above.

The perfluoroethercarboxylic acid (III) is represented by the following general formula (III):

$Rf^1-O-(CF(CF_3)CF_2O)_{n3}CF(CF_3)COOM$ (III)

wherein $Rf^1$ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

$Rf^2(CH_2)_{n4}Rf^3COOM$ (IV)

wherein $Rf^2$ is a perfluoroalkyl group having 1 to 5 carbon atoms; $Rf^3$ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

$Rf^4-O-CY^1Y^2CF_2-COOM$ (V)

wherein $Rf^4$ is a linear or branched partially or fully fluorinated alkyl group having 1 to 12 carbon atoms and optionally containing an ether bond and/or a chlorine atom; $Y^1$ and $Y^2$ are the same or different and are each H or F; and M is as defined above.

The perfluoroalkylsulfonic acid (VI) is represented by the following general formula (VI):

$F(CF_2)_{n5}SO_3M$ (VI)

wherein n5 is an integer of 3 to 14; and M is as defined above.

The ω-H perfluorosulfonic acid (VII) is represented by the following general formula (VII):

$$H(CF_2)_{n6}SO_3M \qquad (VII)$$

wherein n6 is an integer of 4 to 14; and M is as defined above.

The perfluoroalkylalkylenesulfonic acid (VIII) is represented by the following general formula (VIII):

$$Rf^5(CH_2)_{n7}SO_3M \qquad (VIII)$$

wherein $Rf^5$ is a perfluoroalkyl group having 1 to 13 carbon atoms; n7 is an integer of 1 to 3; and M is as defined above.

The alkylalkylenecarboxylic acid (IX) is represented by the following general formula (IX):

$$Rf^6(CH_2)_{n8}COOM \qquad (IX)$$

wherein $Rf^6$ is a linear or branched, partially or fully fluorinated alkyl group having 1 to 13 carbon atoms and optionally containing an ether bond, n8 is an integer of 1 to 3, and M is as defined above.

The fluorocarboxylic acid (X) is represented by the following general formula (X):

$$Rf^7\text{-}O\text{-}Rf^8\text{-}O\text{-}CF_2\text{-}COOM \qquad (X)$$

wherein $Rf^7$ is a linear or branched, partially or fully fluorinated alkyl group having 1 to 6 carbon atoms and optionally containing an ether bond and/or a chlorine atom; $Rf^8$ is a linear or branched, partially or fully fluorinated alkyl group having 1 to 6 carbon atoms; and M is as defined above.

The alkoxyfluorosulfonic acid (XI) is represented by the following general formula (XI):

$$Rf^9\text{-}O\text{-}CY^1Y^2CF_2\text{-}SO_3M \qquad (XI)$$

wherein $Rf^9$ is a linear or branched partially or fully fluorinated alkyl group having 1 to 12 carbon atoms and optionally containing an ether bond and optionally containing chlorine; $Y^1$ and $Y^2$ are the same or different and are each H or F; and M is as defined above.

The compound (XII) is represented by the following general formula (XII):

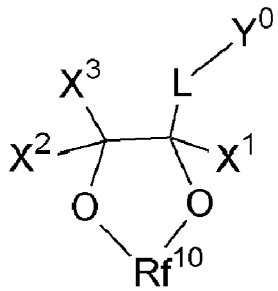

(XII)

wherein $X^1$, $X^2$, and $X^3$ may be the same or different and are H, F, and a linear or branched partially or fully fluorinated alkyl group having 1 to 6 carbon atoms and optionally containing an ether bond; $Rf^{10}$ is a perfluoroalkylene group having 1 to 3 carbon atoms; L is a linking group; and $Y^0$ is an anionic group.

$Y^0$ may be -COOM, $-SO_2M$, or $-SO_3M$, and may be $-SO_3M$ or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

$$Rf^{11}\text{-}O\text{-}(CF_2CF(CF_3)O)_{n9}(CF_2O)_{n10}CF_2COOM \qquad (XIII)$$

wherein $Rf^{11}$ is a fluoroalkyl group having 1 to 5 carbon atoms and containing chlorine; n9 is an integer of 0 to 3; n10 is an integer of 0 to 3; and M is as defined above. Examples of the compound (XIII) include $CF_2ClO(CF_2CF(CF_3)O)_{n9}(CF_2O)_{n10}CF_2COONH_4$ (a mixture having an average molecular weight of 750, wherein n9 and n10 are as defined above).

As described above, examples of the anionic fluorine-containing surfactant include a carboxylic acid-based surfactant and a sulfonic acid-based surfactant.

The fluorine-containing surfactant may be one fluorine-containing surfactant, or may be a mixture containing two or more fluorine-containing surfactants.

The fluorine-containing surfactant preferably does not have a methylene group ($-CH_2-$), and more preferably does not have a C-H bond. The use of a fluorine-containing surfactant that does not have a methylene group ($-CH_2-$) or a C-H bond within the molecule enables the fluoromonomer to be smoothly polymerized in the presence of an aqueous medium.

The number of H atoms that the hydrophobic group of the fluorine-containing surfactant has is preferably 0 or 1, and more preferably 0. The use of a fluorine-containing surfactant in which the number of H atoms bonded to carbon atoms constituting the hydrophobic group is small enables the fluoromonomer to be smoothly polymerized in the presence of an aqueous medium. The number of carbon atoms in the hydrophobic group of the fluorine-containing surfactant having a hydrophobic group and a hydrophilic group is preferably 1 to 50, more preferably 3 to 20, and even more preferably 6 to 12. The hydrophobic group usually constitutes the above-described "portion excluding the anionic group" in the molecular structure of the fluorine-containing surfactant. Examples of the hydrophilic group include groups exemplified as the anionic group $Y^0$. The fluorine-containing surfactant may be a saturated fluorinated surfactant in which all carbon atoms bonded to the hydrophobic group are substituted with fluorine atoms.

Examples of fluorine-containing surfactants, among the above-described anionic fluorine-containing surfactants, include compounds represented by general formula ($N^1$), compounds represented by general formula ($N^2$), and compounds represented by general formula ($N^4$):

$$Rf^{n4}-O-(CY^{n1}F)_pCF_2-Y^0 \qquad (N^4)$$

wherein $Rf^{n4}$ is a linear or branched, partially or fully fluorinated alkyl group having 1 to 12 carbon atoms and optionally containing an ether bond (provided that those having $-CH_2-$ are excluded), $Y^{n1}$ is H or F, p is 0 or 1, and $Y^0$ is as defined above; and compounds represented by general formula ($N^5$):

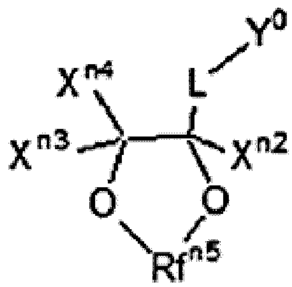

($N^5$)

wherein $X^{n2}$, $X^{n3}$, and $X^{n4}$ may be the same or different and are each independently H, F, or a linear or branched, partially or fully fluorinated alkyl group having 1 to 6 carbon atoms and optionally containing an ether bond (provided that those having $-CH_2-$ are excluded), provided that $X^{n3}$ and $X^{n4}$ are not simultaneously H; $Rf^{n5}$ is a linear or branched, partially or fully fluorinated alkylene group having 1 to 3 carbon atoms and optionally containing an ether bond (provided that those having $-CH_2-$ are excluded); L is a linking group; and $Y^0$ is as defined above, provided that the total number of carbon atoms of $X^{n2}$, $X^{n3}$, $X^{n4}$, and $Rf^{n5}$ is 18 or less.

Among the above-described anionic fluorine-containing surfactants, the fluorine-containing surfactant is more preferably at least one selected from the group consisting of perfluorocarboxylic acid (I) represented by general formula (I), ω-H perfluorocarboxylic acid (II) represented by general formula (II), perfluoroethercarboxylic acid (III) represented by general formula (III), perfluoroalkylalkylenecarboxylic acid (IV) represented by general formula (IV), perfluoroalkoxyfluorocarboxylic acid (V) represented by general formula (V), perfluoroalkylsulfonic acid (VI) represented by general formula (VI), ω-H perfluorosulfonic acid (VII) represented by general formula (VII), perfluoroalkylalkylenesulfonic acid (VIII) represented by general formula (VIII), fluorocarboxylic acid (X) represented by general formula (X): $Rf^7-O-Rf^8-O-CF_2-COOM$ wherein $Rf^7$ is a linear or branched, partially or fully fluorinated alkyl group having 1 to 6 carbon atoms and optionally containing an ether bond and/or a chlorine atom (provided that those having $-CH_2-$ are excluded), $Rf^8$ is a linear or branched, partially or fully fluorinated alkyl group having 1 to 6 carbon atoms (provided that those having $-CH_2-$are excluded), and M is as defined above, an alkoxyfluorosulfonic acid (XI) represented by general formula (XI): $Rf^9-O-CY^1FCF_2-SO_3M$

wherein $Rf^9$ is a linear or branched, partially or fully fluorinated alkyl group having 1 to 12 carbon atoms, optionally containing chlorine, and optionally containing an ether bond (provided that those having $-CH_2-$ are excluded), $Y^1$ is H

or F, and M is as defined above, a compound (XII) represented by general formula (XII):

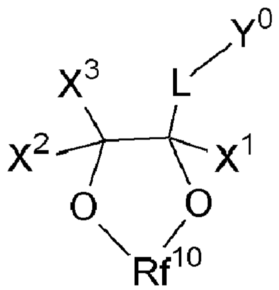

(XII)

wherein $X^1$, $X^2$, and $X^3$ may be the same or different and are each independently H, F, and a linear or branched, partially or fully fluorinated alkyl group having 1 to 6 carbon atoms and optionally containing an ether bond (provided that those having $-CH_2-$ are excluded), provided that $X^2$ and $X^3$ are not simultaneously H, $Rf^{10}$ is a perfluoroalkylene group having 1 to 3 carbon atoms, L is a linking group, and $Y^0$ is an anionic group, and a compound (XIII) represented by general formula (XIII): $Rf^{11}-O-(CF_2CF(CF_3)O)_{n9}(CF_2O)_{n10}CF_2COOM$ wherein $Rf^{11}$ is a fluoroalkyl group having 1 to 5 carbon atoms containing chlorine (provided that those having $-CH_2-$ are excluded), n9 is an integer of 0 to 3, n10 is an integer of 0 to 3, and M is as defined above. The use of such a fluorine-containing surfactant enables the fluoromonomer to be smoothly polymerized in the presence of an aqueous medium.

Examples of the fluorine-containing surfactant include compounds represented by the following formulae. The fluorine-containing surfactant may be a mixture of these compounds.

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$,

$CF_2ClCF(CF_3)OCF_2CF(CF_3)OCF_2COOM$,

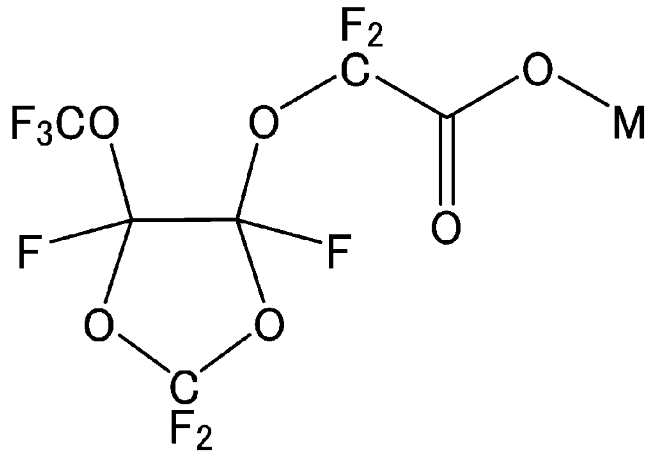

wherein M is H, a metal atom, $NR^7_4$, optionally substituted imidazolium, optionally substituted pyridinium, or optionally substituted phosphonium, and $R^7$ is H or an organic group.

The amount of the fluorine-containing surfactant added is preferably 10 ppm by mass to 10% by mass, is more preferably 100 ppm by mass or more and even more preferably 300 ppm by mass or more, and is more preferably 5% by mass or less and even more preferably 1% by mass or less, based on the aqueous medium.

Suspension polymerization can be carried out in the presence or in the absence of a fluorine-containing surfactant. The amount of the fluorine-containing surfactant added in the suspension polymerization method is preferably 2,000 ppm by mass or less, more preferably 1,000 ppm by mass or less, even more preferably 500 ppm by mass or less, particularly preferably 200 ppm by mass or less, and most preferably 100 ppm by mass or less. The amount of the fluorine-containing surfactant may be 0 ppm by mass.

(Other additives)

In the polymerization of the fluoromonomer, additives such as a buffer, a pH adjuster, a stabilization aid, and a dispersion stabilizer can be used. In the polymerization of the fluoromonomer, a radical scavenger and a decomposer can also be added to regulate the polymerization rate and the molecular weight. Also, in the polymerization of the fluoromonomer, a fluorine-free anionic surfactant, a fluorine-free nonionic surfactant, a fluorine-free cationic surfactant, and the like may be used.

The stabilization aid is preferably paraffin wax, fluorinated oil, fluorinated solvent, and silicone oil, or the like. One stabilization aid may be used singly, or two or more may be used in combination. The stabilization aid is preferably paraffin wax. Paraffin wax may be liquid, semisolid, or solid at room temperature, and is preferably a saturated hydrocarbon having 12 or more carbon atoms. Usually, the melting point of paraffin wax is preferably 40 to 65°C, and more preferably 50 to 65°C.

The amount of the stabilization aid used is preferably 0.1 to 12% by mass, and more preferably 0.1 to 8% by mass, based on the mass of the aqueous medium used. Desirably, the stabilization aid is sufficiently hydrophobic, is completely separated from the aqueous dispersion after polymerization, and does not become a contaminant.

(Polymerization conditions)

The polymerization of the fluoromonomer can be carried out at normal pressure and temperature. Usually, the polymerization temperature is 5 to 120°C, and the polymerization pressure is 0.05 to 10 MPaG. The polymerization temperature and the polymerization pressure are suitably determined according to the type of monomer, the target molecular weight of the fluoropolymer, the reaction rate, and the like.

(Termination of polymerization)

The polymerization of the fluoromonomer can be terminated by, for example, removing the fluoromonomer remaining in the reactor.

The method for removing the fluoromonomer from the reactor is not limited. After the composition is prepared, the fluoromonomer may be removed from the reactor by terminating the stirring of the contents of the reactor if desired and discharging gas until the pressure inside the reactor reaches normal pressure, the fluoromonomer may be removed from the reactor by reducing the pressure inside the reactor to lower than 0.0 MPaG, or the fluoromonomer in the reactor may be

replaced with an inert gas such as nitrogen gas by feeding the inert gas to the reactor. The fluoromonomer may be removed from the reactor as a result of reacting the entirety of the fluoromonomer in the reactor to convert it to the fluoropolymer. As long as the removal from the reactor of the fluoromonomer remaining in the reactor can be carried out to such an extent that the polymerization reaction of the fluoromonomer is sufficiently terminated, a trace amount of residual fluoromonomer may be allowed in the reactor. The removed fluoromonomer can be recovered by known means. The recovered fluoromonomer may be reused to produce the fluoropolymer.

A method comprising, after the composition is prepared, terminating the stirring of the contents of the reactor if desired, reducing the pressure inside the reactor to lower than 0.0 MPaG, and then feeding an inert gas to the reactor is also a preferable method for removing the fluoromonomer from the reactor. Reducing the pressure inside the reactor and feeding an inert gas may be repeated multiple times.

When the fluoromonomer is polymerized at a temperature higher than normal temperature, the reactor may be cooled before removing the fluoromonomer from the reactor or after removing the fluoromonomer from the reactor. When the fluoromonomer is removed from the reactor by means of, for example, gas discharge or nitrogen purge, an unreacted fluoromonomer especially in a liquid form may remain in the reactor, and thus cooling the reactor can sufficiently suppress the reaction of the unreacted fluoromonomer from proceeding.

A polymerization terminator (a radical scavenger) may be added to terminate the polymerization reaction of the fluoromonomer.

The polymerization terminator may be a compound that is not capable of re-initiating the polymerization after being added or chain-transferred to a free radical in the polymerization system. Specifically, used is a compound that readily undergoes a chain transfer reaction with a primary radical or a propagating radical and then generates a stable radical that does not react with a monomer or a compound that readily undergoes an addition reaction with a primary radical or a propagating radical to generate a stable radical. The activity of what is commonly referred to as a chain transfer agent is characterized by the chain transfer constant and the reinitiation efficiency, and, among chain transfer agents, those having almost 0% reinitiation efficiency are referred to as polymerization terminators. The polymerization terminator is preferably at least one selected from the group consisting of aromatic hydroxy compounds, aromatic amines, N,N-diethylhydroxylamine, quinone compounds, terpenes, thiocyanates, and cupric chloride ($CuCl_2$). Examples of aromatic hydroxy compounds include unsubstituted phenols, polyhydric phenols, salicylic acid, m- or p-salicylic acid, gallic acid, and naphthol. Examples of unsubstituted phenols include o-, m-, or p-nitrophenol, o-, m-, or p-aminophenol, and p-nitrosophenol. Examples of polyhydric phenols include catechol, resorcin, hydroquinone, pyrogallol, phloroglucin, and naphthresorcinol. Examples of aromatic amines include o-, m-, or p-phenylenediamine and benzidine. Examples of quinone compounds include hydroquinone, o-, m- or p-benzoquinone, 1,4-naphthoquinone, and alizarin. Examples of thiocyanates include ammonium thiocyanate ($NH_4SCN$), potassium thiocyanate (KSCN), and sodium thiocyanate (NaSCN). In particular, the polymerization terminator is preferably a quinone compound, and more preferably hydroquinone.

(Composition obtained by polymerization)

The polymerization of the fluoromonomer provides a composition containing an aqueous medium and a fluoropolymer. When suspension polymerization is used as a method for polymerizing the fluoromonomer, the resulting composition usually contains an aqueous medium and suspension-polymerized particles of a fluoropolymer. When emulsion polymerization is used as a method for polymerizing the fluoromonomer, an aqueous dispersion in which primary particles of a fluoropolymer are stably dispersed in the aqueous medium is usually obtained.

When a fluorine-containing surfactant is used in the polymerization of the fluoromonomer, the resulting composition usually contains, other than the fluoropolymer, the fluorine-containing surfactant used in the polymerization of the fluoromonomer. The composition obtained by the polymerization of the fluoromonomer may contain, other than the fluoropolymer, a fluorine-containing compound having a hydrophilic group, which is produced by the polymerization of the fluoromonomer.

Herein, the hydrophilic group contained in the fluorine-containing compound is preferably an anionic group such as an acid group, e.g., $-NH_2$, $-PO_3M$, $-OPO_3M$, $-SO_3M$, $-OSO_3M$, and -COOM, wherein M represents a cation. In particular, the hydrophilic group is preferably $-SO_3M$ or -COOM, and more preferably -COOM.

A typical fluorine-containing compound having a hydrophilic group in the composition obtained by the polymerization is a fluorine-containing compound having a hydrophilic group and having a molecular weight of 1,000 g/mol or less. The production method of the present disclosure makes it possible to produce a fluoropolymer which has a molecular weight of 1,000 g/mol or less and in which the content of a fluorine-containing compound having a hydrophilic group is small.

In one embodiment, the composition obtained by the polymerization contains as a fluorine-containing compound having a hydrophilic group a fluorine-containing surfactant added during the polymerization. The fluorine-containing surfactant added during the polymerization is as described above for the fluorine-containing surfactant used in the

polymerization of the fluoromonomer.

The content of the fluorine-containing surfactant in the composition obtained by the polymerization may be 10 ppm by mass or more, 100 ppm by mass or more, or 1,000 ppm by mass or more, and may be 10% by mass or less, 5% by mass or less, or 1% by mass or less, based on the fluoropolymer in the composition.

The content of the fluorine-containing compound having a hydrophilic group in the composition obtained by the polymerization (the total amount of the content of the fluorine-containing surfactant added during the polymerization and the content of the fluorine-containing compound having a hydrophilic group produced by the polymerization of the fluoromonomer) may be 10 ppm by mass or more, 100 ppm by mass or more, or 1,000 ppm by mass or more, and may be 10% by mass or less, 5% by mass or less, or 1% by mass or less, based on the fluoropolymer in the composition.

In one embodiment, the composition obtained by the polymerization contains a compound represented by the following general formula (1) as the fluorine-containing compound having a hydrophilic group:

General formula (1): $[X\text{-}Rf\text{-}A^-]_i M^{i+}$

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; $A^-$ is an acid group; $M^{i+}$ is a cation having a valence of i; and i represents an integer of 1 to 3.

In one embodiment, the composition obtained by the polymerization contains a compound represented by the following general formula (2) as the fluorine-containing compound having a hydrophilic group:

General formula (2): $[C_{n-1}F_{2n-1}COO^-]M^+$

wherein n is an integer of 9 to 14, and $M^+$ represents a cation.

The compound represented by general formula (2) (perfluoroalkanoic acid) is known to be formed during polymerization when perfluoro(alkyl vinyl ether) or the like is used as a fluoromonomer (see International Publication No. WO 2019/161153).

In one embodiment, the composition obtained by the polymerization contains a compound represented by the following general formula (3) as the fluorine-containing compound having a hydrophilic group:

General formula (3): $[R^1\text{-}O\text{-}L\text{-}CO_2^-]M^+$

wherein $R^1$ is a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated, or fully fluorinated alkylene group; and $M^+$ represents a cation.

In one embodiment, the composition obtained by the polymerization contains a compound represented by general formula (4) as the fluorine-containing compound having a hydrophilic group:

General formula (4): $[H\text{-}(CF_2)_mCO_2^-]M^+$

wherein m is an integer of 3 to 19, and $M^+$ represents a cation.

(Treatment using oxygen-containing gas)

In the production method of the present disclosure, after the composition containing an aqueous medium and the fluoropolymer is prepared, the composition is brought into contact with a gas containing at least oxygen. By treating the composition obtained by the polymerization with a gas containing at least oxygen, a fluoropolymer in which the content of a fluorine-containing compound having a hydrophilic group is small can be obtained.

Examples of the gas containing at least oxygen include oxygen gas, air, and oxygen gas diluted with nitrogen gas.

The polymerization of the fluoromonomer and the treatment of the composition with the oxygen-containing gas are usually carried out in the same reactor. Contact between the composition and the gas containing at least oxygen can be carried out by, for example, removing the fluoromonomer remaining in the reactor and then feeding the gas containing at least oxygen to the same reactor. In one embodiment of the present disclosure, after the composition is prepared, the fluoromonomer in the reactor under pressure is partially released from the reactor to reduce the pressure in the reactor to normal pressure, an inert gas such as nitrogen gas is fed to the reactor to replace the fluoromonomer in the reactor with the inert gas, the pressure in the reactor is reduced to a reduced pressure state, and the gas containing at least oxygen is fed to the reactor.

The form of the composition to be treated with the gas containing at least oxygen is not limited. For example, when suspension polymerization is used as a method for polymerizing the fluoromonomer, a composition containing an aqueous

medium and suspension-polymerized particles of the fluoropolymer is obtained and, accordingly, the resulting composition can be directly subjected to the treatment. When emulsion polymerization is used as a method for polymerizing the fluoromonomer, an aqueous dispersion in which primary particles of the fluoropolymer are stably dispersed in the aqueous medium is obtained and, accordingly, the resulting aqueous dispersion (a composition) can be directly subjected to the treatment.

Preferably, contact between the composition and the gas containing at least oxygen is promptly carried out after the composition containing the aqueous medium and the fluoropolymer is prepared. By promptly treating the composition obtained by the polymerization with the oxygen-containing gas without leaving the composition to stand, a fluoropolymer in which the content of a fluorine-containing compound having a hydrophilic group is even smaller can be obtained.

For example, the gas containing at least oxygen is fed to the reactor preferably within 10 minutes and more preferably within 5 minutes from the time when the fluoromonomer remaining in the reactor is removed.

The fluoropolymer content in the composition to be treated with the gas containing at least oxygen may be, for example, 5 to 75% by mass. The fluoropolymer content in the composition is a value obtained by drying 1 g of the composition in an air dryer at 150°C for 60 minutes, measuring the mass of non-volatile matter, and calculating the proportion of the mass of the non-volatile matter based on the mass (1 g) of the polymerization dispersion in percentage.

In one embodiment of the production method of the present disclosure, the amount of dissolved oxygen in the composition is regulated to 0.001 mg/L or more when bringing the composition into contact with the gas containing at least oxygen. By causing a sufficient amount of oxygen to be dissolved in the composition, a fluoropolymer in which the content of a fluorine-containing compound having a hydrophilic group is even smaller can be obtained.

The lower limit of the amount of dissolved oxygen in the composition when bringing the composition into contact with the gas containing at least oxygen may be 0.01 mg/L, 0.10 mg/L, 0.50 mg/L, 1.0 mg/L, 1.5 mg/L, 2.0 mg/L, 3.0 mg/L, 4.0 mg/L, or 5.0 mg/L. The upper limit of the amount of dissolved oxygen in the composition when bringing the composition into contact with the gas containing at least oxygen may be 10.0 mg/L, 9.0 mg/L, 8.0 mg/L, 7.0 mg/L, or 6.0 mg/L.

The concentration of dissolved oxygen in the composition can be measured by methods such as a titration method, a diaphragm electrode method, and a fluorescence method.

In one embodiment of the production method of the present disclosure, the fluoromonomer is polymerized using an amount of an aqueous medium that accounts for 1 to 95% by volume of the internal volume of a reactor. By forming an appropriately sized gas phase portion in the reactor, the fluoromonomer can be smoothly polymerized.

In one embodiment of the production method of the present disclosure, the oxygen concentration in the gas phase in the reactor is regulated to 20 ppm by volume or less when polymerizing the fluoromonomer. By sufficiently lowering the oxygen concentration in the reactor, the fluoromonomer can be smoothly polymerized while suppressing side reactions. In conventional art as well, the polymerization of a fluoromonomer is usually carried out, with the oxygen concentration in the reactor being sufficiently lowered.

The upper limit of the oxygen concentration in the gas phase in the reactor when polymerizing the fluoromonomer may be 100 ppm by volume, 50 ppm by volume, 30 ppm by volume, 20 ppm by volume, or 10 ppm by volume or less, and the lower limit is not limited and may be 1 ppm by volume or more.

The oxygen concentration in the gas phase in the reactor can be measured by a method such as a laser spectroscopic, zirconia, magnetic, or electrode method.

In one embodiment of the production method of the present disclosure, the amount of dissolved oxygen in the composition obtained by polymerizing the fluoromonomer (i.e., the amount of dissolved oxygen in the composition before contact with the gas containing at least oxygen) is 0.1 mg/L or less. A composition in which the amount of dissolved oxygen is small can be obtained by polymerizing the fluoromonomer, with the oxygen concentration in the reactor being sufficiently lowered. In one embodiment of the production method of the present disclosure, after preparing a composition in which the amount of dissolved oxygen is small, the composition is brought into contact with the gas containing at least oxygen to increase the amount of dissolved oxygen in the composition to the above range.

The upper limit of the amount of dissolved oxygen in the composition obtained by polymerizing the fluoromonomer may be 0.05 mg/L or 0.01 mg/L, and the lower limit is not limited and may be 0.001 mg/L.

The temperature of the composition when bringing the composition into contact with the gas containing at least oxygen is preferably 5°C or higher, more preferably 15°C or higher, even more preferably 30°C or higher, and yet more preferably 35°C or higher, and is preferably 85°C or lower, more preferably 75°C or lower, even more preferably 65°C or lower, yet more preferably 55°C or lower, and particularly preferably 50°C or lower.

The time of contact between the composition and the gas containing at least oxygen is preferably 1 minute or longer, more preferably 5 minutes or longer, even more preferably 10 minutes or longer, and yet more preferably 15 minutes or longer, and is preferably 400 minutes or shorter, more preferably 300 minutes or shorter, and even more preferably 150 minutes or shorter.

Contact between the composition and the gas containing at least oxygen can be carried out while stirring the composition containing the aqueous medium and the fluoropolymer. Stirring is preferably carried out with stirring force such that the composition and oxygen are brought into sufficient contact while suppressing aggregation and fibrillation of

the fluoropolymer in the composition.

In one embodiment, the composition is stirred with stirring force such that bubbles are created in the composition. By sufficiently stirring the composition to bring the composition into sufficient contact with oxygen in this manner, a fluoropolymer in which the content of the fluorine-containing compound having a hydrophilic group is even smaller can be obtained.

In one embodiment, the composition is stirred at a power number of 0.3 or more. By sufficiently stirring the composition to bring the composition into sufficient contact with oxygen in this manner, a fluoropolymer having an even smaller content of the fluorine-containing compound having a hydrophilic group can be obtained.

The power number is preferably 0.4 or more and more preferably 0.5 or more, and the upper limit is not limited and may be 0.9 or less.

The power number (Np) can be calculated according to the following formula. The following calculation formula can be suitably used as a formula for calculating the power number particularly when using a cylindrical stirring tank:

$$Np = A/Re + B((10^3 + 1.2 * Re^0.66)/(10^3 + 3.2 * Re^0.66))^p * (H/D)^(0.35 + b/D) * (\sin\theta)^1.2$$

$$Re=nd^2\rho/\mu$$

$$A=14+(b/D)*((670*(d/D-0.6)^2+185))$$

$$B=10^(1.3-4*(b/D-0.5)^2-1.14*(d/D))$$

$$p=1.1+4(b/D)-2.5*(d/D-0.5)^2-7*(b/D)^4$$

wherein

factors relating to the stirring blade include blade length d [m], blade width b [m], blade angle $\theta$ [°], and rotational speed n [1/sec],
factors relating to the stirring tank include tank diameter D [m] and liquid depth H [m], and
factors relating to the stirred liquid include liquid density $\rho$ [kg/m^3] and liquid viscosity $\mu$ [kg/m sec].

In one embodiment, after the composition is stirred, and the stirring is terminated, the composition may be left to stand still. The time for leaving the composition to stand still is preferably 1 minute or longer, more preferably 5 minutes or longer, even more preferably 10 minutes or longer, and yet more preferably 15 minutes or longer, and is preferably 200 minutes or shorter, and more preferably 150 minutes or shorter.

In one embodiment, after the composition is prepared by polymerizing the fluoromonomer while stirring the aqueous medium, the composition is brought into contact with the gas containing at least oxygen while stirring the composition at a stirring speed of -80% or more to +50% or less relative to the stirring speed during the polymerization. The lower limit of the stirring speed is, in ascending order of preference, -75% or more, -50% or more, -25% or more, and -10% or more, and the upper limit of the stirring speed is preferably +25% or less and more preferably +0% or less. In this way, by bringing the composition into contact with the gas containing at least oxygen while stirring the composition with stirring force similar to that employed in the polymerization of the fluoromonomer, the composition and oxygen can be brought into sufficient contact with each other while suppressing aggregation and fibrillation of the fluoropolymer in the composition, and thus the fluoropolymer in which the content of a fluorine-containing compound having a hydrophilic group is even smaller can be obtained.

(Washing, drying, pulverizing, forming)

After the composition obtained by the polymerization is treated with the oxygen-containing gas, the fluoropolymer in the composition can be washed or dried.

When emulsion polymerization is used as a method for polymerizing the fluoromonomer, an aqueous dispersion in which primary particles of a fluoropolymer are stably dispersed in the aqueous medium is usually obtained. Primary particles of the fluoropolymer in the aqueous dispersion can be coagulated, the fluoropolymer can be recovered as a coagulate, and the recovered fluoropolymer can be washed or dried.

Coagulation of primary particles of the fluoropolymer in the aqueous dispersion is carried out by, for example,

diluting the aqueous dispersion obtained by the polymerization with water to a polymer concentration of 5 to 20% by mass, optionally regulating the pH to neutral or alkaline, and then stirring the aqueous dispersion more vigorously than the stirring performed during the reaction in a stirrer-equipped vessel. Coagulation may be carried out by stirring the aqueous dispersion while adding a water-soluble organic compound such as methanol or acetone, an inorganic salt such as potassium nitrate or ammonium carbonate, or an inorganic acid such as hydrochloric acid, sulfuric acid, or nitric acid as a coagulating agent. Coagulation may also be continuously carried out using an in-line mixer or the like.

When suspension polymerization is used as a method for polymerizing the fluoromonomer, the fluoropolymer can be recovered as wet suspension-polymerized particles without carrying out coagulation. Accordingly, after the composition obtained by the polymerization is treated with the oxygen-containing gas, the fluoropolymer (suspension-polymerized particles) in the composition can be recovered and then washed or dried.

In one embodiment of the production method of the present disclosure, the fluoropolymer is washed after bringing the composition into contact with the oxygen-containing gas. When washing the fluoropolymer, water or an organic solvent can be used. Washing may be carried out once or multiple times.

Examples of the organic solvent used in washing include ethers, halogenated hydrocarbons, aromatic hydrocarbons, pyridine, nitriles, nitrogen-containing polar organic compounds, dimethyl sulfoxide, and alcohols.

In one embodiment of the production method of the present disclosure, the fluoropolymer is dried after bringing the composition into contact with the oxygen-containing gas.

An example of the method for drying the fluoropolymer may be a method involving a dryer. Examples of the dryer include hot-air dryers, box-type dryers, band dryers, tunnel dryers, jet dryers, moving-bed dryers, rotary dryers, fluidized-bed dryers, pneumatic conveying dryers, disk dryers, cylindrical agitating dryers, inverted-cone agitating dryers, microwave devices, vacuum heat treatment devices, box-type electric furnaces, flash dryers, vibration dryers, belt dryers, extrusion dryers, and spray dryers.

The temperature at which the fluoropolymer is dried is preferably lower than 300°C, more preferably 280°C or lower, and even more preferably 250°C or lower, and is preferably 50°C or higher, more preferably 100°C or higher, even more preferably 120°C or higher, and particularly preferably 140°C or higher. The drying temperature is the temperature of the atmosphere surrounding the fluoropolymer, and when hot air is used in drying, the drying temperature can be determined by measuring the temperature of hot air. The temperature of hot air can be measured at the inlet through which hot air is fed to the dryer or at the outlet through which hot air is discharged from the dryer, and is preferably measured at the outlet.

The fluoropolymer before being dried may be dehydrated. An example of the method for dehydrating the wet fluoropolymer may be a dehydration method involving a dehydrator. Examples of the dehydrator include vibration dehydrators, filtration dehydrators, and centrifugal dehydrators.

In one embodiment of the production method of the present disclosure, the fluoropolymer is pulverized after bringing the composition into contact with the oxygen-containing gas. Pulverization may be carried out after the fluoropolymer is dried, may be carried out after the fluoropolymer is washed, or may be carried out while washing the fluoropolymer. In one embodiment, the fluoropolymer is pulverized to produce a pulverized fluoropolymer, the pulverized fluoropolymer is washed, and the washed fluoropolymer is dried. In another embodiment, the fluoropolymer is coarsely pulverized to produce a coarsely pulverized fluoropolymer, the coarsely pulverized fluoropolymer is finely pulverized while being washed to produce a finely pulverized fluoropolymer, the finely pulverized fluoropolymer is further washed, and the washed fluoropolymer is dried.

Pulverization may be wet pulverization or dry pulverization. An example of the method for pulverizing the fluoropolymer may be a pulverization method involving a pulverizer. Examples of the pulverizer include impact-type pulverizers such as hammer mills, pin mills, high-speed rotary mills and jet mills, and attrition-type pulverizers such as cutter mills, feather mills and colloid mills, for pulverization by shearing force generated by a rotary blade and an outer stator (a fixed blade). In pulverization, multiple pulverizers may be used in combination.

The temperature at which the pulverization treatment is carried out is preferably -200 to 50°C, more preferably 1°C or higher, more preferably 40°C or lower, and even more preferably 30°C or lower.

An example of the method for pulverizing the fluoropolymer while washing it may be a method comprising pulverizing the fluoropolymer in water or an organic solvent. For example, water or an organic solvent and the fluoropolymer may be simultaneously fed to an attrition-type pulverizer such as a cutter mill to pulverize the fluoropolymer, or water or an organic solvent and the fluoropolymer may be mixed in advance, and the mixture may be fed to a pulverizer to pulverize the fluoropolymer.

Pulverization may be carried out once, or may be carried out repeatedly until pulverized particles having a desired average particle size or a desired particle size distribution can be produced.

After the fluoropolymer is pulverized, the resulting pulverized particles may be classified by a known method such as pneumatic classification. By classification, fine particles having a very small particle size and coarse particles having a very large particle size are removed, and thus a fluoropolymer having a desired average particle size or a desired particle size distribution can be obtained.

In one embodiment of the production method of the present disclosure, the fluoropolymer is formed into pellets after bringing the composition into contact with the oxygen-containing gas. The dried fluoropolymer is usually used in the forming of the fluoropolymer. The forming of the fluoropolymer can be carried out by known methods such as extrusion forming.

(Fluoropolymer)

The use of the production method of the present disclosure makes it possible to obtain a fluoropolymer in which the content of a fluorine-containing compound having a hydrophilic group is small.
The form of the fluoropolymer obtained by the production method of the present disclosure is not limited, and may be, for example, powder, pellets, or primary particles dispersed in an aqueous dispersion. In one embodiment, the form of the fluoropolymer obtained by the production method of the present disclosure may be powder or pellets.
The content of the fluorine-containing compound having a hydrophilic group in the fluoropolymer may be more than 0 ppb by mass and less than 300 ppb by mass based on the fluoropolymer. A preferable upper limit of the content of the fluorine-containing compound having a hydrophilic group in the fluoropolymer is 250 ppb by mass or less, 200 ppb by mass or less, 150 ppb by mass or less, 100 ppb by mass or less, 75 ppb by mass or less, 50 ppb by mass or less, and 25 ppb by mass or less.
The fluorine-containing compound having a hydrophilic group may be the above-described fluorine-containing surfactant used in the polymerization of the fluoromonomer. A typical fluorine-containing surfactant is a fluorine-containing surfactant having a molecular weight of 1,000 g/mol or less, and preferably 800 g/mol or less.
In one embodiment, the fluoropolymer is substantially free of a compound represented by the following general formula (1) as a fluorine-containing compound having a hydrophilic group:

General formula (1): $[X\text{-}Rf\text{-}A^-]_iM^{i+}$

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; $A^-$ is an acid group; $M^{i+}$ is a cation having a valence of i; and i represents an integer of 1 to 3.
In one embodiment, the fluoropolymer is substantially free of a compound represented by the following general formula (2) as a fluorine-containing compound having a hydrophilic group:

General formula (2): $[C_{n-1}F_{2n-1}COO^-]M^+$

wherein n is an integer of 9 to 14, and $M^+$ represents a cation.
The compound represented by general formula (2) (perfluoroalkanoic acid) is known to be formed during polymerization when perfluoroalkyl vinyl ether or the like is used as a modifying monomer (see International Publication No. WO 2019/161153).
In one embodiment, the fluoropolymer is substantially free of a compound represented by the following general formula (3) as a fluorine-containing compound having a hydrophilic group:

General formula (3): $[R^1\text{-}O\text{-}L\text{-}CO_2^-]M^+$

wherein $R^1$ is a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated, or fully fluorinated alkylene group; and $M^+$ represents a cation.
In one embodiment, the fluoropolymer is substantially free of a compound represented by general formula (4) as a fluorine-containing compound having a hydrophilic group:

General formula (4) : $[H\text{-}(CF_2)_mCO_2^-]M^+$

wherein m is an integer of 3 to 19, and $M^+$ represents a cation.
Herein, being substantially free of any of the compounds represented by general formulae (1) to (4) means that the content of any of the compounds represented by general formulae (1) to (4) in the fluoropolymer is 100 ppb by mass or less. The content of any of the compounds represented by general formulae (1) to (4) in the fluoropolymer is preferably 80 ppb by mass or less, more preferably 60 ppb by mass or less, even more preferably 40 ppb by mass or less, yet more preferably 25 ppb by mass or less, and particularly preferably 1 ppb by mass or less, and most preferably the fluorine-containing surfactant is below the detection limit of measurement by liquid chromatography-mass spectrometry (LC/MS).
The content of the fluorine-containing compound having a hydrophilic group in the fluoropolymer can be

quantified by known methods. For example, the content can be quantified by LC/MS analysis.

First, methanol is added to the fluoropolymer, extraction is performed, and the resulting extract is subjected to LC/MS analysis. To further increase extraction efficiency, treatment by Soxhlet extraction, ultrasonic treatment, or the like may be performed.

The resulting extract is suitably concentrated by nitrogen purging, and the fluorine-containing compound having a hydrophilic group in the concentrated extract is measured by LC/MS.

From the resulting LC/MS spectrum, molecular weight information is extracted, and a match with the structural formula of a candidate fluorine-containing compound having a hydrophilic group is checked.

Thereafter, aqueous solutions having five or more different content levels of the confirmed fluorine-containing compound having a hydrophilic group are prepared, LC/MS analysis of the aqueous solutions with the respective content levels is carried out, and the relationship between the content level and the area corresponding to that content level is plotted to draw a calibration curve.

Then, using the calibration curve, the area of the LC/MS chromatogram of the fluorine-containing compound having a hydrophilic group in the extract can be converted to the content of the fluorine-containing compound having a hydrophilic group.

Note that the resulting extract can be concentrated by nitrogen purging, thus enabling the lower quantification limit of the measurement method to be lowered.

Also, the present disclosure provides a powder of modified polytetrafluoroethylene wherein the amount of ΔPPVE in modified polytetrafluoroethylene is 0.002% by mass or more, and the content of a fluorine-containing compound having a hydrophilic group represented by general formula (2) is 100 ppb by mass or less based on the mass of modified polytetrafluoroethylene:

General formula (2): $[C_{n-1}F_{2n-1}COO^-]M^+$

wherein n is an integer of 9 to 14, and $M^+$ represents a cation.

Modified polytetrafluoroethylene (modified PTFE) preferably contains a perfluorovinyl ether unit as a modifying monomer unit, and more preferably contains a perfluoro(propyl vinyl ether) (PPVE) unit as a modifying monomer unit.

The amount of ΔPPVE (the amount of Δperfluoro(propyl vinyl ether)) is preferably 0.003% by mass or more, more preferably 0.005% by mass or more, and even more preferably 0.007% or more, and is preferably 0.020% by mass or less.

The amount of ΔPPVE is the difference between the PPVE contents (% by mass) of modified PTFE before and after heating. The amount of ΔPPVE can be measured by the measuring method described in the Examples.

The content of the fluorine-containing compound having a hydrophilic group represented by general formula (2) is preferably 90 ppb by mass or less, more preferably 80 ppb by mass or less, even more preferably 70 ppb by mass or less, yet more preferably 60 ppb by mass or less, and particularly preferably 50 ppb by mass or less, and is preferably 0 ppb by mass or more based on the mass of modified PTFE.

Next, the fluoropolymer obtained by the production method of the present disclosure will now be described in more detail.

A fluoropolymer such as a fluororesin or a fluoroelastomer is obtained by polymerizing a fluoromonomer.

Examples of the fluoropolymer include a TFE polymer in which TFE is a monomer having the highest molar fraction among the monomers in the polymer (hereinafter referred to as the "most abundant monomer"), a VDF polymer in which VDF is the most abundant monomer, and a CTFE polymer in which the most abundant monomer is CTFE.

The fluoropolymer preferably has an ion exchange ratio (IXR) higher than 53. A preferable fluoropolymer does not have any ionic group at all, or has a limited number of ionic groups that result in an ion exchange rate higher than about 100. The ion exchange rate of a preferable fluoropolymer is preferably 1,000 or more, more preferably 2,000 or more, and even more preferably 5,000 or more.

Preferably, the TFE polymer may be a TFE homopolymer, or may be a copolymer composed of (1) TFE, (2) one or more fluorine-containing monomers excluding TFE and having 2 to 8 carbon atoms, in particular, VDF, HFP, or CTFE, and (3) a further monomer. Examples of the further monomer (3) include fluoro(alkyl vinyl ether) having an alkyl group having 1 to 5 carbon atoms, in particular, 1 to 3 carbon atoms; fluorodioxole; perfluoroalkyl ethylene; and ω-hydroperfluoroolefin.

The TFE polymer may also be a copolymer of TFE and one or more fluorine-free monomers. Examples of the fluorine-free monomers include alkenes such as ethylene and propylene; vinyl esters; and vinyl ethers. The TFE polymer may also be a copolymer of TFE, one or more fluorine-containing monomers having 2 to 8 carbon atoms, and one or more fluorine-free monomers.

Preferably, the VDF polymer may be a VDF homopolymer [PVDF], or may be a copolymer composed of (1) VDF, (2) one or more fluoroolefins excluding VDF and having 2 to 8 carbon atoms, in particular, TFE, HFP, or CTFE, and (3) perfluoro(alkyl vinyl ether) having an alkyl group having 1 to 5 carbon atoms, in particular, 1 to 3 carbon atoms.

Preferably, the CTFE polymer may be a CTFE homopolymer, or may be a copolymer composed of (1) CTFE, (2) one or more fluoroolefins excluding CTFE and having 2 to 8 carbon atoms, in particular, TFE or HFP, and (3) perfluoro(alkyl

vinyl ether) having an alkyl group having 1 to 5 carbon atoms, in particular, 1 to 3 carbon atoms.

The CTFE polymer may also be a copolymer of CTFE and one or more fluorine-free monomers, and examples of the fluorine-free monomers include alkenes such as ethylene and propylene; vinyl esters; and vinyl ethers.

The fluoropolymer may be glassy, plastic, or elastomeric. Such fluoropolymers are amorphous or partially crystalline, and can be subjected to compression firing processing, melt processing, or non-melt processing.

In the production method of the present disclosure, the fluoropolymer is preferably produced as a fluororesin.

In the production method of the present disclosure, for example, a tetrafluoroethylene polymer [TFE polymer (PTFE)] may be suitably produced as a non melt-processible fluororesin (I), and an ethylene/TFE copolymer [ETFE], a TFE/HFP copolymer [FEP], a TFE/perfluoro(alkyl vinyl ether) copolymer [such as PFA or MFA], a TFE/perfluoroallyl ether copolymer, a TFE/VDF copolymer, or an electrolyte polymer precursor may be suitably produced as a melt-fabricable fluororesin (II).

The fluoropolymer is preferably a fluororesin, in particular, more preferably a fluororesin having a degree of fluorine substitution of 50% or more as calculated by the following formula, even more preferably a fluororesin having a degree of fluorine substitution exceeding 50%, yet more preferably a fluororesin having a degree of fluorine substitution of 55% or more, further preferably a fluororesin having a degree of fluorine substitution of 60% or more, further preferably a fluororesin having a degree of fluorine substitution of 75% or more, particularly preferably a fluororesin having a degree of fluorine substitution of 80% or more, and most preferably a fluororesin having a degree of fluorine substitution of 90 to 100%, i.e., a perfluororesin:

Degree of fluorine substitution (%) = (Number of fluorine atoms bonded to carbon atoms constituting fluoropolymer)/ ((Number of hydrogen atoms bonded to carbon atoms constituting fluoropolymer) + (Number of fluorine atoms and chlorine atoms bonded to carbon atoms constituting fluoropolymer)) $\times$ 100 (Formula)

The perfluororesin is more preferably a fluororesin having a degree of fluorine substitution of 95 to 100%, even more preferably polytetrafluoroethylene (PTFE), FEP, or PFA, yet more preferably PTFE or PFA, and particularly preferably PTFE. FEP and PFA include TFE/HFP/perfluoro(alkyl vinyl ether) copolymers.

The fluoropolymer may have a core-shell structure. Examples of the fluoropolymer having a core-shell structure include modified PTFE wherein particles have a core composed of high molecular weight PTFE and a shell composed of lower molecular weight PTFE or modified PTFE. Examples of such modified PTFE include PTFE described in Japanese Translation of PCT International Application Publication No. 2005-527652.

The core-shell structure may take the following forms:

Core: TFE homopolymer Shell: TFE homopolymer
Core: Modified PTFE Shell: TFE homopolymer
Core: Modified PTFE Shell: Modified PTFE
Core: TFE homopolymer Shell: Modified PTFE
Core: Low molecular weight PTFE Shell: High molecular weight PTFE
Core: High molecular weight PTFE Shell: Low molecular weight PTFE

In the fluoropolymer having a core-shell structure, the lower limit of the proportion of the core is preferably 0.5% by mass, more preferably 1.0% by mass, even more preferably 2.0% by mass, yet more preferably 3.0% by mass, particularly preferably 5.0% by mass, and most preferably 10.0% by mass. The upper limit of the proportion of the core is preferably 99.5% by mass, more preferably 99.0% by mass, even more preferably 98.0% by mass, yet more preferably 97.0% by mass, particularly preferably 95.0% by mass, and most preferably 90.0% by mass.

In the fluoropolymer having a core-shell structure, the lower limit of the proportion of the shell is preferably 0.5% by mass, more preferably 1.0% by mass, even more preferably 2.0% by mass, yet more preferably 3.0% by mass, particularly preferably 5.0% by mass, and most preferably 10.0% by mass. The upper limit of the proportion of the shell is preferably 99.5% by mass, more preferably 99.0% by mass, even more preferably 98.0% by mass, yet more preferably 97.0% by mass, particularly preferably 95.0% by mass, and most preferably 90.0% by mass.

The fluoropolymer having a core-shell structure may have two or more layers of the core or the shell. For example, the fluoropolymer may have a three-layer structure having an inner core composed of modified PTFE, an outer core composed of TFE homopolymer, and a shell composed of modified PTFE.

The fluoropolymer having a core-shell structure may also include those in which one particle of the fluoropolymer has multiple cores.

The non melt-processible fluororesin (I) and the melt-fabricable fluororesin (II) suitably produced by the production method of the present disclosure are preferably produced in the following embodiments.

(I) Non melt-processible fluororesin

In the production method of the present disclosure, the polymerization of TFE is usually carried out at a polymerization temperature of 10 to 150°C at a polymerization pressure of 0.05 to 5 MPaG. For example, the polymerization temperature is more preferably 30°C or higher, and even more preferably 50°C or higher. The temperature is more preferably 120°C or lower, and even more preferably 100°C or lower. The polymerization pressure is more preferably 0.3 MPaG or higher and even more preferably 0.5 MPaG or higher, and is more preferably 5.0 MPaG or lower and even more preferably 3.0 MPaG or lower. In particular, from the viewpoint of increasing the yield of the fluoropolymer, the pressure is preferably 1.0 MPaG or higher, more preferably 1.2 MPaG or higher, even more preferably 1.5 MPaG or higher, and yet more preferably 2.0 MPaG or higher.

In one embodiment, the polymerization is carried out by introducing pure water into a pressure-resistant reactor equipped with a stirrer, removing oxygen, introducing TFE, regulating the temperature to a predetermined level, and adding a polymerization initiator to initiate the reaction. If the pressure decreases as the reaction progresses, additional TFE is continuously or intermittently fed to maintain the initial pressure. Once the predetermined amount of TFE is fed, the feeding is terminated, TFE in the reactor is purged, and the temperature is returned to room temperature to terminate the reaction. To prevent the pressure from decreasing, additional TFE may be continuously or intermittently fed.

In the production of the TFE polymer (PTFE), known various modifying monomers can also be used in combination. Herein, the concept of the "TFE polymer" encompasses not only the TFE homopolymer but also copolymers of TFE and modifying monomers, which are non melt-processible (hereinafter referred to as "modified PTFE").

The modifying monomer is not limited as long as it can be copolymerized with TFE, and examples include fluoromonomers and non-fluoromonomers. One modifying monomer may be used singly, or multiple modifying monomers may be used.

Examples of the non-fluoromonomers include, but are not limited to, monomers represented by the general formula: $CH_2=CR^{Q1}-LR^{Q2}$ wherein $R^{Q1}$ represents a hydrogen atom or an alkyl group; L represents a single bond, -CO-O-*, -O-CO-*, or -O-; * indicates the position of bonding to $R^{Q2}$; and $R^{Q2}$ represents a hydrogen atom, an alkyl group, or a nitrile group.

Examples of the non-fluoromonomers include methyl acrylate, methyl methacrylate, ethyl acrylate, ethyl methacrylate, propyl acrylate, propyl methacrylate butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. In particular, preferable non-fluoromonomers are butyl methacrylate, vinyl acetate, and acrylic acid.

Examples of the fluoromonomers include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and perfluoroallyl ethers.

Examples of the perfluorovinyl ether include, but are not limited to, perfluoro unsaturated compounds represented by general formula (A):

$$CF_2=CF-ORf \qquad (A)$$

wherein Rf represents a perfluoro organic group. The "perfluoro organic group" as used herein means an organic group in which all hydrogen atoms bonded to the carbon atoms are replaced with fluorine atoms. The perfluoro organic group may have ether oxygen.

Examples of the perfluorovinyl ether include perfluoro(alkyl vinyl ether) (PAVE) in which Rf is a perfluoroalkyl group having 1 to 10 carbon atoms in general formula (A). The perfluoroalkyl group preferably has 1 to 5 carbon atoms.

Examples of the perfluoroalkyl group in PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include those represented by general formula (A) in which Rf is a perfluoro(alkoxyalkyl) group having 4 to 9 carbon atoms; those in which Rf is a group represented by the following formula:

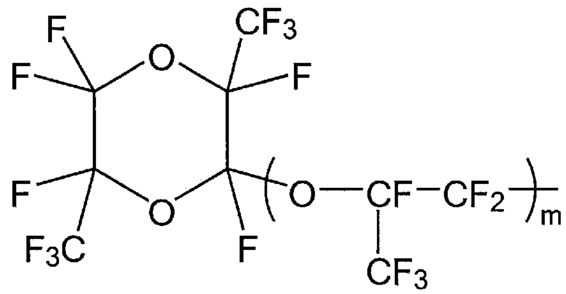

wherein m represents an integer of 0 or 1 to 4; and those in which Rf is a group represented by the following formula:

$CF_3CF_2CF_2\text{-}(O\text{-}CF(CF_3)\text{-}CF_2)_n\text{-}$

wherein n represents an integer of 1 to 4.

Examples of hydrogen-containing fluoroolefins include $CH_2=CF_2$, $CFH=CH_2$, $CFH=CF_2$, $CH_2=CFCF_3$, $CH_2=CHCF_3$, $CHF=CHCF_3$ (E-form), and $CHF=CHCF_3$ (Z-form).

Examples of (perfluoroalkyl)ethylene (PFAE) include, but are not limited to, (perfluorobutyl) ethylene (PFBE), and (perfluorohexyl) ethylene.

Examples of perfluoroallyl ether include fluoromonomers represented by the general formula:

$CF_2=CF\text{-}CF_2\text{-}ORf$

wherein Rf represents a perfluoro organic group.

Rf in the above general formula is the same as Rf in general formula (A). Rf is preferably a perfluoroalkyl group having 1 to 10 carbon atoms or a perfluoroalkoxyalkyl group having 1 to 10 carbon atoms. The perfluoroallyl ether is preferably at least one selected from the group consisting of $CF_2=CF\text{-}CF_2\text{-}O\text{-}CF_3$, $CF_2=CF\text{-}CF_2\text{-}O\text{-}C_2F_3$, $CF_2=CF\text{-}CF_2\text{-}O\text{-}C_3F_7$, and $CF_2=CF\text{-}CF_2\text{-}O\text{-}C_4F_9$, more preferably at least one selected from the group consisting of $CF_2=CF\text{-}CF_2\text{-}O\text{-}C_2F_3$, $CF_2=CF\text{-}CF_2\text{-}O\text{-}C_3F_7$, and $CF_2=CF\text{-}CF_2\text{-}O\text{-}C_4F_9$, and even more preferably $CF_2=CF\text{-}CF_2\text{-}O\text{-}CF_2CF_2CF_3$.

A preferable example of the modifying monomer is also a modifying monomer (3). The modifying monomer (3) is preferably at least one selected from the group consisting of modifying monomers represented by formulae (3a) to (3d):

$CH_2=CH\text{-}Rf^1$ (3a)

wherein $Rf^1$ is a perfluoroalkyl group having 1 to 10 carbon atoms;

$CF_2=CF\text{-}O\text{-}Rf^2$ (3b)

wherein $Rf^2$ is a perfluoroalkyl group having 1 to 2 carbon atoms;

$CF_2=CF\text{-}O\text{-}(CF_2)_nCF=CF_2$ (3c)

wherein n is 1 or 2; and

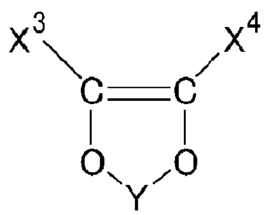

(3d)

wherein $X^3$ and $X^4$ are each F, Cl, or a methoxy group, Y is Y1 or Y2, and

$\text{-}CF=CF\text{-}$ (Y1)

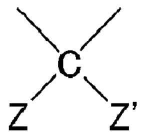

(Y2)

in Y2, Z and Z' are each F or a fluorinated alkyl group having 1 to 3 carbon atoms.

The content of the modifying monomer (3) unit is preferably in a range of 0.00001 to 1.0% by mass based on all polymerization units of PTFE. The lower limit is more preferably 0.0001% by mass, even more preferably 0.0005% by mass, yet more preferably 0.001% by mass, and further preferably 0.005% by mass. The upper limit, in ascending order of preference, is 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

The modifying monomer is preferably at least one selected from the group consisting of hexafluoropropylene, chlorotrifluoroethylene, vinylidene fluoride, perfluoro(alkyl vinyl ether), (perfluoroalkyl)ethylene, ethylene, and a modifying monomer having a hydrophilic group and a functional group capable of reaction by radical polymerization because an aqueous dispersion having a small average primary particle size, a small primary particle aspect ratio, and excellent stability can be obtained. By using the modifying monomer, an aqueous dispersion of PTFE can be obtained, which has a small average primary particle size, a small primary particle aspect ratio, and excellent dispersion stability. Also, an aqueous dispersion in which the amount of an uncoagulated polymer is small can be obtained.

From the viewpoint of reactivity with TFE, the modifying monomer preferably contains at least one selected from the group consisting of hexafluoropropylene, perfluoro(alkyl vinyl ether), and (perfluoroalkyl)ethylene.

More preferably, the modifying monomer contains at least one selected from the group consisting of hexafluoropropylene, perfluoro(methyl vinyl ether), perfluoro(propyl vinyl ether), (perfluorobutyl)ethylene, (perfluorohexyl) ethylene, and (perfluorooctyl)ethylene.

The total amount of hexafluoropropylene unit, the perfluoro(alkyl vinyl ether) unit, and the (perfluoroalkyl) ethylene unit is preferably in a range of 0.00001 to 1% by mass based on all polymerization units of PTFE. The lower limit of the total amount is more preferably 0.0001% by mass, even more preferably 0.0005% by mass, yet more preferably 0.001% by mass, and further preferably 0.005% by mass. The upper limit in ascending order of preference is 0.80% by mass, 0.70% by mass, 0.50% by mass, 0.40% by mass, 0.30% by mass, 0.20% by mass, 0.15% by mass, 0.10% by mass, and 0.08% by mass.

The modifying monomer also preferably contains a modifying monomer having a hydrophilic group and a functional group capable of reaction by radical polymerization (hereinafter referred to as a "modifying monomer (A)").

Due to the modifying monomer (A), PTFE particles having a small primary particle size can be obtained, and an aqueous dispersion having high dispersion stability can be obtained. The amount of an uncoagulated polymer can also be lowered. In addition, the aspect ratio of primary particles can be lowered.

The amount of the modifying monomer (A) used is preferably an amount exceeding an amount corresponding to 0.1 ppm by mass of the aqueous medium, more preferably an amount exceeding 0.5 ppm by mass, even more preferably an amount exceeding 1.0 ppm by mass, yet more preferably 5 ppm by mass or more, and particularly preferably 10 ppm by mass or more. An excessively small amount of the modifying monomer (A) used may result in PTFE, the average primary particle size of which is not small.

The amount of the modifying monomer (A) used is within the above range and, for example, the upper limit can be 5,000 ppm by mass. In the production method, the modifying monomer (A) may be further added to the system during the course of reaction to improve the stability of the aqueous dispersion during or after the reaction.

The modifying monomer (A) is highly water-soluble and, thus, the unreacted modifying monomer (A) if remaining in the aqueous dispersion can be easily removed in the concentration step or the coagulation/washing step.

While the modifying monomer (A) is incorporated into the produced polymer during the course of polymerization, the concentration of the modifying monomer (A) itself in the polymerization system is low, and the amount thereof incorporated into the polymer is small, not resulting in problems of impaired heat resistance of PTFE or discoloration after firing.

Examples of the hydrophilic group in the modifying monomer (A) include $-NH_2$, $-PO_3M$, $-OPO_3M$, $-SO_3M$, $-OSO_3M$, and - COOM (wherein M is H, a metal atom, $NR^{7y}_4$, optionally substituted imidazolium, optionally substituted pyridinium, or optionally substituted phosphonium; and $R^{7y}$ is H or an organic group and may be the same or different, and any two may be bonded to each other to form a ring). In particular, the hydrophilic group is preferably $-SO_3M$ or -COOM. The organic group of $R^{7y}$ is preferably an alkyl group. $R^{7y}$ is preferably H or a $C_{1-10}$ organic group, more preferably H or a $C_{1-4}$ organic group, and even more preferably H or a $C_{1-4}$ alkyl group.

Examples of the metal atom include monovalent and divalent metal atoms such as alkali metals (Group 1) and alkaline earth metals (Group 2), and Na, K, or Li is preferable.

Examples of the "functional group capable of reaction by radical polymerization" in the modifying monomer (A) include groups having an ethylenically unsaturated bond, such as a vinyl group and an allyl group. The group having an

ethylenically unsaturated bond can be represented by the following formula:

$$CX^eX^g=CX^fR-$$

wherein $X^e$, $X^f$, and $X^g$ are each independently F, Cl, H, $CF_3$, $CF_2H$, $CFH_2$, or $CH_3$; and R is a linking group. Examples of the linking group R include linking groups referred to as $R^a$, which will be described below. Preferable examples include groups having an unsaturated bond, such as $-CH=CH_2$, $-CF=CH_2$, $-CH=CF_2$, $-CF=CF_2$, $-CH_2-CH=CH_2$, $-CF_2-CF=CH_2$, $-CF_2-CF=CF_2$, $-(C=O)-CH=CH_2$, $-(C=O)-CF=CH_2$, $-(C=O)-CH=CF_2$, $-(C=O)-CF=CF_2$, $-(C=O)-C(CH_3)=CH_2$, $-(C=O)-C(CF_3)=CH_2$, $-(C=O)-C(CH_3)=CF_2$, $-(C=O)-C(CF_3)=CF_2$, $-O-CH_2-CH=CH_2$, $-O-CF_2-CF=CH_2$, $-O-CH_2-CH=CF_2$, and $-O-CF_2-CF=CF_2$.

The modifying monomer (A) has a functional group capable of reaction by radical polymerization, and it is thus conjectured that when used in the polymerization, the modifying monomer (A) reacts with the fluorine-containing monomer in the initial stage of the polymerization reaction, and highly stable particles having a hydrophilic group that is derived from the modifying monomer (A) are formed. Accordingly, it seems that the polymerization carried out in the presence of the modifying monomer (A) results in a larger number of particles.

One modifying monomer (A) or two or more modifying monomers (A) may be present in the polymerization.

The modifying monomer (A) in the polymerization may be a compound having an unsaturated bond.

The modifying monomer (A) is preferably a compound represented by general formula (4):

$$CX^iX^k=CX^jR^a-(CZ^1Z^2)_k-Y^3 \qquad (4)$$

wherein $X^i$, $X^j$, and $X^k$ are each independently F, Cl, H, or $CF_3$; $Y^3$ is a hydrophilic group; $R^a$ is a linking group; $Z^1$ and $Z^2$ are each independently H, F, or $CF_3$; and k is 0 or 1.

Examples of the hydrophilic group include $-NH_2$, $-PO_3M$, $-OPO_3M$, $-SO_3M$, $-OSO_3M$, and -COOM (wherein M is H, a metal atom, $NR^{7y}_4$, optionally substituted imidazolium, optionally substituted pyridinium, or optionally substituted phosphonium; and $R^{7y}$ may be the same or different and is H or an organic group, and any two may be bonded to each other to form a ring). In particular, the hydrophilic group is preferably $-SO_3M$ or -COOM. The organic group of $R^{7y}$ is preferably an alkyl group. $R^{7y}$ is preferably H or a $C_{1-10}$ organic group, more preferably H or a $C_{1-4}$ organic group, and even more preferably H or a $C_{1-4}$ alkyl group. Examples of the metal atom include monovalent and divalent metal atoms such as alkali metals (Group 1) and alkaline earth metals (Group 2), and Na, K, or Li is preferable.

The use of the modifying monomer (A) makes it possible to obtain an aqueous dispersion having a smaller average primary particle size and better stability. Also, the aspect ratio of primary particles can be more lowered.

$R^a$ is a linking group. Herein, the "linking group" refers to a divalent linking group. The linking group may be a single bond and preferably contains at least one carbon atom, and the number of carbon atoms may be 2 or more, 4 or more, 8 or more, 10 or more, or 20 or more. There is no upper limit, and the upper limit may be, for example, 100 or less, and 50 or less.

The linking group may be linear or branched, cyclic or acyclic, saturated or unsaturated, or substituted or unsubstituted, may contain one or more heteroatoms selected from the group consisting of sulfur, oxygen, and nitrogen as desired, and may contain one or more functional groups selected from the group consisting of ester, amide, sulfonamide, carbonyl, carbonate, urethane, urea, and carbamate as desired. The linking group may be free of carbon atoms and may be a catenary heteroatom such as oxygen, sulfur, or nitrogen.

Preferably, $R^a$ is, for example, a catenary heteroatom, such as oxygen, sulfur, or nitrogen, or a divalent organic group.

When $R^a$ is a divalent organic group, hydrogen atoms bonded to carbon atoms may be replaced with halogens other than fluorine, such as chlorine, and may or may not contain double bonds. $R^a$ may be linear or branched, and may be cyclic or acyclic. $R^a$ may contain a functional group (such as ester, ether, ketone, amine, or halide).

$R^a$ may be a non-fluorinated divalent organic group, or a partially fluorinated or perfluorinated divalent organic group.

$R^a$ may be, for example, a hydrocarbon group in which no fluorine atoms are bonded to carbon atoms, a hydrocarbon group in which some hydrogen atoms bonded to carbon atoms are replaced with fluorine atoms, a hydrocarbon group in which all hydrogen atoms bonded to carbon atoms are replaced with fluorine atoms, -(C=O)-, -(C=O)-O-, or a hydrocarbon group containing an ether bond, and these may contain an oxygen atom, may contain a double bond, and may contain a functional group.

$R^a$ is preferably a hydrocarbon group having 1 to 100 carbon atoms, optionally containing a -(C=O)-, -(C=O)-O-, or an ether bond, and optionally containing a carbonyl group, and in the hydrocarbon group, some or all hydrogen atoms bonded to carbon atoms may be substituted with fluorine atoms.

$R^a$ is preferably at least one selected from the group consisting of $-(CH_2)_a-$, $-(CF_2)_a-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)-[O-(CF_2)_b]_c-$, $-[(CF_2)-O]_b-[(CF_2)_c-O]_d-$, -O

$[(CF_2)-O]_b-[(CF_2)_c-O]_d-$, $-O-[CF_2CF(CF_3)O]a-(CF_2)_b-$, -(C=O)-, -(C=O)-O-, $-(C=O)-(CH_2)_a-$, - $(C=O)-(CF_2)_a-$, $-(C=O)-O-(CH_2)_a-$, $-(C=O)-O-(CF_2)_a-$, $-(C=O)-[(CH_2)_a-O]_b-$, $-(C=O)-[(CF_2)_a-O]_b-$, $-(C=O)-O[(CH_2)_a-O]_b-$, $-(C=O)-O[(CF_2)_a-O]_b-$, $-(C=O)-O[(CH_2)_a-O]_b-(CH_2)_c-$, $-(C=O)-O[(CF_2)_a-O]_b-(CF_2)_c-$, $-(C=O)-(CH_2)_a-O-(CH_2)_b-$, $-(C=O)-(CF_2)-O-(CF_2)_b-$, $-(C=O)-O-(CH_2)_a-O-(CH_2)_b-$, $-(C=O)-O-(CF_2)_a-O-(CF_2)_b-$, $-(C=O)-O-C_6H_4-$, and a combination thereof.

In the formulae, a, b, c, and d are independently at least 1; a, b, c, and d may independently be 2 or more, 3 or more, 4 or more, 10 or more, or 20 or more; and the upper limits of a, b, c, and d are, for example, 100.

Specific examples suitable as $R^a$ include $-CF_2-O-$, $-CF_2-O-CF_2-$, $-CF_2-O-CH_2-$, $-CF_2-O-CH_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CH_2-$, -(C=O)-, -(C=O)-O-, $-(C=O)-(CH_2)-$, $-(C=O)-(CF_2)-$, $-(C=O)-O-(CH_2)-$, $(C=O)-O-(CF_2)-$, $-(C=O)-[(CH_2)_2-O]_n-$, $-(C=O)-[(CF_2)_2-O]_n-$, $-(C=O)-O[(CH_2)_2-O]_n-$, $-(C=O)-O[(CF_2)_2-O]_n-$, $-(C=O)-O[(CH_2)_2-O]_n-(CH_2)-$, $-(C=O)-O[(CF_2)_2-O]_n-(CF_2)-$, $-(C=O)-(CH_2)_2-O-(CH_2)-$, $-(C=O)-(CF_2)_2-O-(CF_2)-$, $-(C=O)-O-(CH_2)_2-O-(CH_2)-$, $-(C=O-O-(CF_2)_2-O-(CF_2)-$, and $-(C=O)-O-C_6H_4-$. In particular, $R^a$ specifically is preferably $-CF_2-O-$, $-CF_2-O-CF_2-$, $-CF_2-O-CF_2CF_2-$, $-CF_2-O-CF(CF_3)-$, $-CF_2-O-CF(CF_3)CF_2-$, $-CF_2-O-CF(CF_3)CF_2-O-$, -(C=O)-, -(C=O)-O-, $-(C=O)-(CH_2)-$, $-(C=O)-O-(CH_2)-$, $-(C=O)-O[(CH_2)_2-O]_n-$, $-(C=O)-O[(CH_2)_2-O]_n-(CH_2)-$, $-(C=O)-(CH_2)_2-O-(CH_2)-$, or $-(C=O)-O-C_6H_4-$.

In the formulae, n is an integer of 1 to 10.

$-R^a-(CZ^1Z^2)_k-$ in general formula (4) is preferably $-CF_2-O-CF_2-$, $-CF_2-O-CF(CF_3)-$, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, - $CF_2-O-CF(CF_3)-CF(CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)-$ $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, $-CF_2-O-CF(CF_3)CF_2-O-C(CF_3)_2-$, -(C=O) -, -(C=O)-O-, $-(C=O)-(CH_2)-$, $-(C=O)-(CF_2)-$, $-(C=O)-O-(CH_2)-$, $-(C=O)-O-(CF_2)-$, $-(C=O)-[(CH_2)_2-O]_n-(CH_2)-$, $-(C=O)-[(CF_2)_2-O]_n-(CF_2)-$, $-(C=O)-[(CH_2)_2-O]_n-(CH_2)-(CH_2)-$, $-(C=O)-[(CF_2)_2-O]_n-(CF_2)-(CF_2)-$, $-(C=O)-O[(CH_2)_2-O]_n-(CF_2)-$, $-(C=O)-O[(CH_2)_2-O]_n-(CH_2)-(CH_2)-$, $-(C=O)-O[(CF_2)_2-O]_n-(CF_2)-$, $-(C=O)-O[(CF_2)_2-O]_n-(CF_2)-(CF_2)-$, $-(C=O)-(CH_2)_2-O-(CH_2)-(CH_2)-$, $-(C=O)-(CF_2)_2-O-(CF_2)-(CF_2)-$, $-(C=O)-O-(CH_2)_2-O-(CH_2)-(CH_2)-$, $-(C=O)-O-(CF_2)_2-O-(CF_2)-(CF_2)-$, $-(C=O)-O-(CH_2)_2-O-(CH_2)-C(CF_3)_2-$, - $(C=O)-O-(CF_2)_2-O-(CF_2)-C(CF_3)_2-$, or $-(C=O)-O-C_6H_4-C(CF_3)_2-$, and more preferably $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, $-CF_2-O-CF(CF_3)CF_2-O-CF(CF_3)-$, -(C=O)-, - $(C=O)-O-(CH_2)-$, $-(C=O)-O-(CH_2)-(CH_2)-$, $-(C=O)-O[(CH_2)_2-O]_n-(CH_2)-(CH_2)-$, - $(C=O)-O-(CH_2)_2-O-(CH_2)-C\ (CF_3)_2-$, or $-(C=O)-O-C_6H_4-C(CF_3)_2-$.

In the formulae, n is an integer of 1 to 10.

Specific examples of the compound represented by general formula (4) include:

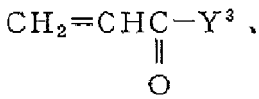 、 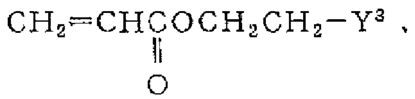 、 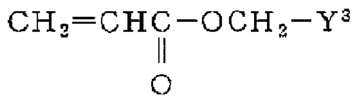 、

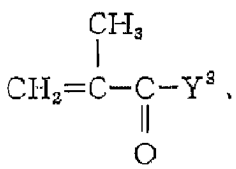 、 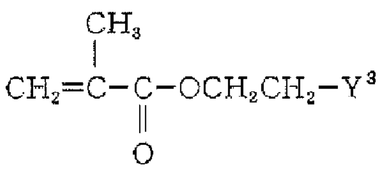 、 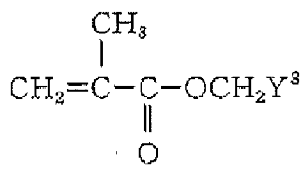 、

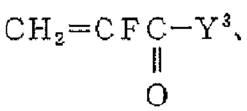 、 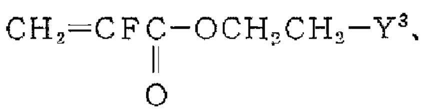 、 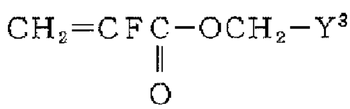 、

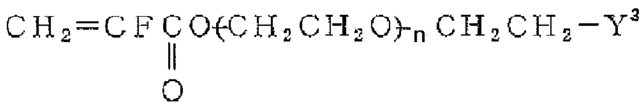 、

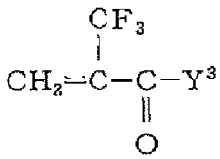 、 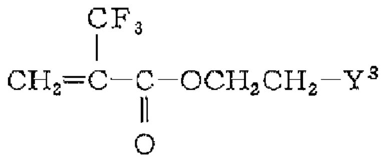 、

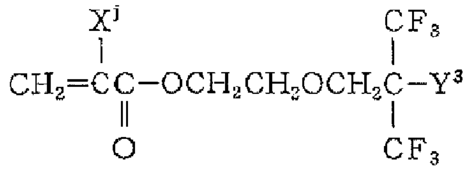

(i)、

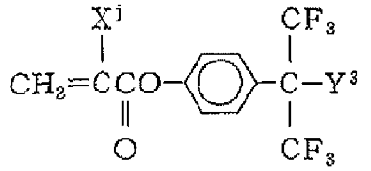

(ii)

wherein $X^j$ and $Y^3$ are as described above, and n is an integer of 1 to 10.

$R^a$ is preferably a divalent group represented by general formula (r1):

$$-(C=O)_h-(O)_i-CF_2-O-(CX^6{}_2)_e-\{O-CF(CF_3)\}_f-(O)_g- \qquad (r1)$$

wherein $X^6$ is each independently H, F, or $CF_3$, e is an integer of 0 to 3, f is an integer of 0 to 3, g is 0 or 1, h is 0 or 1, and i is 0 or 1; and $R^a$ is also preferably a divalent group represented by general formula (r2):

$$-(C=O)_h-(O)_i-CF_2-O-(CX^7{}_2)_e-(O)_g- \qquad (r2)$$

wherein $X^7$ is each independently H, F, or $CF_3$, e is an integer of 0 to 3, g is 0 or 1, h is 0 or 1, and i is 0 or 1.

$-R^a-(CZ^1Z^2)_k-$ in general formula (4) is also preferably a divalent group represented by the following formula (t1):

$$-(C=O)_h-(O)_i-CF_2-O-(CX^6{}_2)_e-\{O-CF(CF_3)\}_f-(O)_g-CZ^1Z^2- \qquad (t1)$$

wherein $X^6$ is each independently H, F, or $CF_3$, e is an integer of 0 to 3, f is an integer of 0 to 3, g is 0 or 1, h is 0 or 1, i is 0 or 1, and $Z^1$ and $Z^2$ are each independently F or $CF_3$;
and in formula (t1), more preferably, one of $Z^1$ and $Z^2$ is F, and the other is $CF_3$.

$-R^a-(CZ^1Z^2)_k-$ in general formula (4) is also preferably a divalent group represented by the following formula (t2):

$$-(C=O)_h-(O)_i-CF_2-O-(CX^7{}_2)_e-(O)_g-CZ^1Z^2- \qquad (t2)$$

wherein $X^7$ is each independently H, F, or $CF_3$, e is an integer of 0 to 3, g is 0 or 1, h is 0 or 1, i is 0 or 1, and $Z^1$ and $Z^2$ are each independently F or $CF_3$; and in formula (t2), more preferably, one of $Z^1$ and $Z^2$ is F, and the other is $CF_3$.

Also preferably, the compound represented by general formula (4) has a C-F bond and does not have a C-H bond, except for the hydrophilic group ($Y^3$). That is to say, in general formula (4), it is preferable that $X^i$, $X^j$, and $X^k$ are all F and that $R^a$ is a perfluoroalkylene group having 1 or more carbon atoms, and the perfluoroalkylene group may be linear or branched, may be cyclic or acyclic, and may contain at least one catenary heteroatom. The number of carbon atoms in the perfluoroalkylene group may be 2 to 20, and may be 4 to 18.

The compound represented by general formula (4) may be partially fluorinated. That is to say, the compound represented by general formula (4) also preferably has at least one hydrogen atom bonded to a carbon atom and has at least one fluorine atom bonded to a carbon atom, except for the hydrophilic group ($Y^3$).

The compound represented by general formula (4) is also preferably a compound represented by the following formula (4a):

$$CF_2=CF-O-Rf^0-Y^3 \qquad (4a)$$

wherein $Y^3$ is a hydrophilic group, and $Rf^0$ is a perfluorinated divalent linking group that may be linear or branched, cyclic or acyclic, saturated or unsaturated, and substituted or unsubstituted, and that optionally further contains one or more heteroatoms selected from the group consisting of sulfur, oxygen, and nitrogen.

The compound represented by general formula (4) is also preferably a compound represented by the following formula (4b):

$$CH_2=CHO-Rf^0-Y^3 \qquad (4b)$$

wherein $Y^3$ is a hydrophilic group, and $Rf^0$ is a perfluorinated divalent linking group as defined in formula (4a).

In general formula (4), $Y^3$ is preferably $-OSO_3M$. When $Y^3$ is $-OSO_3M$, examples of the compound represented by general formula (4) include $CF_2=CF(OCF_2CF_2CH_2OSO_3M)$, $CF_2=CF(O(CF_2)_4CH_2OSO_3M)$, $CF_2=CF(OCF_2CF(CF_3)CH_2OSO_3M)$, $CF_2=CF(OCF_2CF(CF_3)OCF_2CF_2CH_2OSO_3M)$, $CH_2=CH((CF_2)_4CH_2OSO_3M)$, $CF_2=CF(OCF_2CF_2SO_2N(CH_3)CH_2CH_2OSO_3M)$, $CH_2=CH(CF_2CF_2CH_2OSO_3M)$, and $CF_2=CF(OCF_2CF_2CF_2CF_2SO_2N(CH_3)CH_2CH_2OSO_3M)$. In the formulae, M is as described above.

In general formula (4), $Y^3$ is also preferably $-SO_3M$. When $Y^3$ is $-SO_3M$, examples of the compound represented by general formula (4) include $CF_2=CF(OCF_2CF_2SO_3M)$, $CF_2=CF(O(CF_2)_4SO_3M)$, $CF_2=CF(OCF_2CF(CF_3)SO_3M)$, $CF_2=CF(OCF_2CF(CF_3)OCF_2CF_2SO_3M)$, $CH_2=CH(CF_2CF_2SO_3M)$, $CF_2=CF(OCF_2CF(CF_3)OCF_2CF_2CF_2CF_2SO_3M)$, $CH_2=CH((CF_2)_4SO_3M)$, and $CH_2=CH((CF_2)_3SO_3M)$. In the formulae, M is as described above.

In general formula (4), $Y^3$ is also preferably -COOM. When $Y^3$ is -COOM, examples of the compound represented by general formula (4) include $CF_2=CF(OCF_2CF_2COOM)$, $CF_2=CF(OCF_2CF_2CF_2COOM)$, $CF_2=CF(O(CF_2)_5COOM)$, $CF_2=CF(OCF_2CF(CF_3)COOM)$, $CF_2=CF(OCF_2CF(CF_3)O(CF_2)_nCOOM)$ (wherein n is greater than 1), $CH_2=CH(CF_2CF_2COOM)$, $CH_2=CH((CF_2)_4COOM)$, $CH_2=CH((CF_2)_3COOM)$, $CF_2=CF(OCF_2CF_2SO_2NR'CH_2COOM)$, $CF_2=CF(O(CF_2)_4SO_2NR'CH_2COOM)$, $CF_2=CF(OCF_2CF(CF_3)SO_2NR'CH_2COOM)$, $CF_2=CF(OCF_2CF(CF_3)OCF_2CF_2SO_2NR'CH_2COOM)$, $CH_2=CH(CF_2CF_2SO_2NR'CH_2COOM)$, $CF_2=CF(OCF_2CF(CF_3)OCF_2CF_2CF_2CF_2SO_2NR'CH_2COOM)$, $CH_2=CH((CF_2)_4SO_2NR'CH_2COOM)$, and $CH_2=CH((CF_2)_3SO_2NR'CH_2COOM)$. In the formulae, R' is H or a $C_{1-4}$ alkyl group, and M is as described above.

In general formula (4), $Y^3$ is also preferably $-OPO_3M$ or $-OP(O)(OM)_2$. When $Y^3$ is $-OPO_3M$ or $-OP(O)(OM)_2$, examples of the compound represented by general formula (4) include $CF_2=CF(OCF_2CF_2CH_2OP(O)(OM)_2)$, $CF_2=CF(O(CF_2)_4CH_2OP(O)(OM)_2)$, $CF_2=CF(OCF_2CF(CF_3)CH_2OP(O)(OM)_2)$, $CF_2=CF(OCF_2CF(CF_3)OCF_2CF_2CH_2OP(O)(OM)_2)$, $CF_2=CF(OCF_2CF_2SO_2N(CH_3)CH_2CH_2OP(O)(OM)_2)$, $CF_2=CF(OCF_2CF_2CF_2CF_2SO_2N(CH_3)CH_2CH_2OP(O)(OM)_2)$, $CH_2=CH(CF_2CF_2CH_2OP(O)(OM)_2$, $CH_2=CH((CF_2)_4CH_2OP(O)(OM)_2)$, and $CH_2=CH((CF_2)_3CH_2OP(O)(OM)_2)$. In the formulae, M is as described above.

In general formula (4), $Y^3$ is also preferably $-PO_3M$ or $- P(O)(OM)_2$. When $Y^3$ is $-PO_3M$ or $-P(O)(OM)_2$, examples of the compound represented by general formula (4) include $CF_2=CF(OCF_2CF_2P(O)(OM)_2)$, $CF_2=CF(O(CF_2)_4P(O)(OM)_2)$, $CF_2=CF(OCF_2CF(CF_3)P(O)(OM)_2)$, $CF_2=CF(OCF_2CF(CF_3)OCF_2CF_2P(O)(OM)_2)$, $CH_2=CH(CF_2CF_2P(O)(OM)_2)$, $CH_2=CH((CF_2)_4P(O)(OM)_2)$, and $CH_2=CH((CF_2)_3P(O)(OM)_2)$, wherein M is as described above.

The compound represented by general formula (4) is preferably at least one compound selected from the group consisting of a compound represented by general formula (5):

$$CX_2=CY(-CZ_2-O-Rf-Y^3) \qquad (5)$$

wherein X is the same or different and is -H or -F, Y is -H, - F, an alkyl group, or a fluorine-containing alkyl group, Z is the same or different and is -H, -F, an alkyl group, or a fluorine-containing alkyl group, Rf is a fluorine-containing alkylene group having 1 to 40 carbon atoms or a fluorine-containing alkylene group having 2 to 100 carbon atoms and having an ether bond, and $Y^3$ is as described above; a compound represented by general formula (6):

$$CX_2=CY(-O-Rf-Y^3) \qquad (6)$$

wherein X is the same or different and is -H or -F, Y is -H, - F, an alkyl group, or a fluorine-containing alkyl group, Rf is a fluorine-containing alkylene group having 1 to 40 carbon atoms or a fluorine-containing alkylene group having 2 to 100 carbon atoms and having an ether bond, and $Y^3$ is as described above; and a compound represented by general formula (7):

$$CX_2=CY(-Rf-Y^3) \qquad (7)$$

wherein X is the same or different and is -H or -F, Y is -H, - F, an alkyl group, or a fluorine-containing alkyl group, Rf is a fluorine-containing alkylene group having 1 to 40 carbon atoms or a fluorine-containing alkylene group having 2 to 100 carbon atoms and having an ether bond, and $Y^3$ is as described above.

The fluorine-containing alkylene group having 2 to 100 carbon atoms and having an ether bond is an alkylene group that does not have a structure wherein an oxygen atom is at the terminal and that contains an ether bond between carbon atoms.

In general formula (5), X is -H or -F. X may be both - F, or at least one may be -H. For example, one may be -F and the other may be -H, or both may be -H.

In general formula (5), Y is -H, -F, an alkyl group, or a fluorine-containing alkyl group.

The alkyl group is an alkyl group not containing a fluorine atom, and has one or more carbon atoms. The number

of carbon atoms in the alkyl group is preferably 6 or less, more preferably 4 or less, and even more preferably 3 or less.

The fluorine-containing alkyl group is an alkyl group that contains at least one fluorine atom, and has one or more carbon atoms. The number of carbon atoms in the fluorine-containing alkyl group is preferably 6 or less, more preferably 4 or less, and even more preferably 3 or less.

Y is preferably -H, -F, or $-CF_3$, and -F is more preferable.

In general formula (5), Z is the same or different and is -H, -F, an alkyl group, or a fluoroalkyl group.

The alkyl group is an alkyl group not containing a fluorine atom, and has one or more carbon atoms. The number of carbon atoms in the alkyl group is preferably 6 or less, more preferably 4 or less, and even more preferably 3 or less.

The fluorine-containing alkyl group is an alkyl group that contains at least one fluorine atom, and has one or more carbon atoms. The number of carbon atoms in the fluorine-containing alkyl group is preferably 6 or less, more preferably 4 or less, and even more preferably 3 or less.

Z is preferably -H, -F, or $-CF_3$, and -F is more preferable.

In general formula (5), at least one of X, Y, and Z preferably includes a fluorine atom. For example, X may be -H, and Y and Z may be -F.

In general formula (5), Rf is a fluorine-containing alkylene group having 1 to 40 carbon atoms or a fluorine-containing alkylene group having 2 to 100 carbon atoms and having an ether bond.

The fluorine-containing alkylene group preferably has two or more carbon atoms. The number of carbon atoms is also preferably 30 or less, more preferably 20 or less, and even more preferably 10 or less. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The fluorine-containing alkylene group having an ether bond preferably has 3 or more carbon atoms. The number of carbon atoms in the fluorine-containing alkylene group having an ether bond is preferably 60 or less, more preferably 30 or less, and even more preferably 12 or less.

The fluorine-containing alkylene group having an ether bond is also preferably a divalent group represented by:

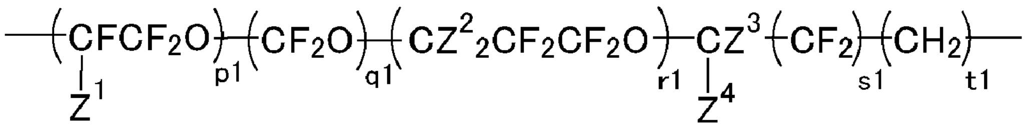

wherein $Z^1$ is F or $CF_3$, $Z^2$ and $Z^3$ are each H or F, $Z^4$ is H, F, or $CF_3$, p1 + q1 + r1 is an integer of 1 to 10, s1 is 0 or 1, and t1 is an integer of 0 to 5.

Specific examples of the fluorine-containing alkylene group having an ether bond include $-CF(CF_3)CF_2-O-CF(CF_3)-$, $-(CF(CF_3)CF_2-O)_n-CF(CF_3)-$ (wherein n is an integer of 1 to 10), $-CF(CF_3)CF_2-O-CF(CF_3)CH_2-$, $-(CF(CF_3)CF_2-O)_n-CF(CF_3)CH_2-$ (wherein n is an integer of 1 to 10), $-CH_2CF_2CF_2O-CH_2CF_2CH_2-$, $-CF_2CF_2CF_2O-CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

In general formula (5), $Y^3$ is preferably -COOM, $-SO_3M$, or $-OSO_3M$ wherein M is H, a metal atom, $NR^{7y}_4$, optionally substituted imidazolium, optionally substituted pyridinium, or optionally substituted phosphonium; and $R^{7y}$ may be the same or different and is H or an organic group, and any two may be bonded to each other to form a ring).

The organic group of $R^{7y}$ is preferably an alkyl group.

$R^{7y}$ is preferably H or a $C_{1-10}$ organic group, more preferably H or a $C_{1-4}$ organic group, and even more preferably H or a $C_{1-4}$ alkyl group.

Examples of the metal atom include alkali metals (Group 1) and alkaline earth metals (Group 2), and Na, K, or Li is preferable.

M is preferably -H, a metal atom, or $NR^7_4$, more preferably -H, an alkali metal (Group 1), an alkaline earth metal (Group 2), or $NR^7_4$, even more preferably -H, -Na, -K, -Li, or $NH_4$, yet more preferably -H, -Na, -K, or $NH_4$, particularly preferably - H, -Na, or $NH_4$, and most preferably -H or $-NH_4$.

$Y^3$ is preferably -COOM or $-SO_3M$, and more preferably -COOM.

The compound represented by general formula (5) is preferably a compound (5a) represented by general formula (5a):

$$CH_2=CF(-CF_2-O-Rf-Y^3) \qquad (5a)$$

wherein Rf and $Y^3$ are as described above.

Specific examples of the compound represented by general formula (5a) include compounds represented by the following formula:

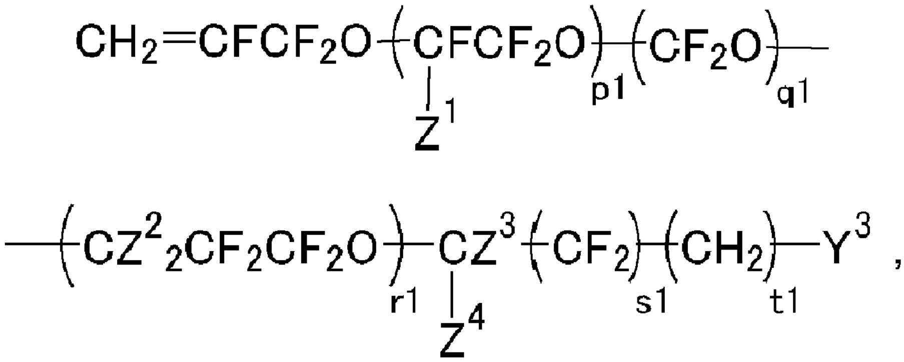

wherein $Z^1$ is F or $CF_3$, $Z^2$ and $Z^3$ are each H or F, $Z^4$ is H, F, or $CF_3$, p1 + q1 + r1 is an integer of 0 to 10, s1 is 0 or 1, t1 is an integer of 0 to 5, and $Y^3$ is as described above, provided that when $Z^3$ and $Z^4$ are both H, p1 + q1 + r1 + s1 is not 0. More specific examples include:

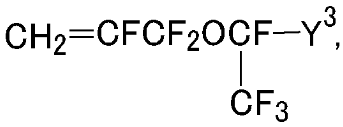, 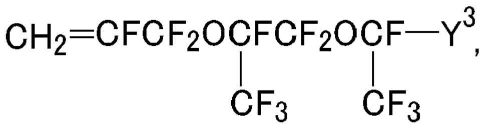,

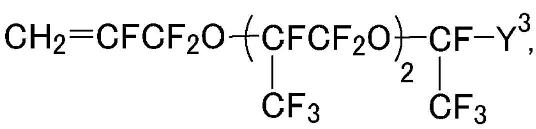, 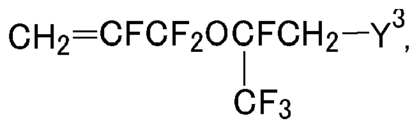,

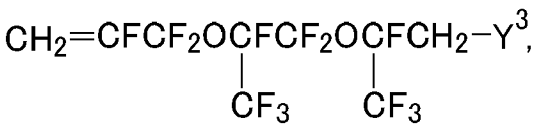, 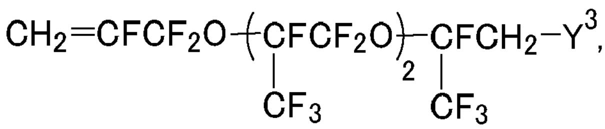,

$CH_2=CFCF_2OCH_2CF_2\text{-}Y^3$, $CH_2=CFCF_2O(CH_2CF_2CF_2O)CH_2CF_2\text{-}Y^3$,

$CH_2=CFCF_2OCH_2CF_2CH_2\text{-}Y^3$,

$CH_2=CFCF_2O(CH_2CF_2CF_2O)CH_2CF_2CH_2\text{-}Y^3$,

$CH_2=CFCF_2OCF_2CF_2\text{-}Y^3$, $CH_2=CFCF_2O(CF_2CF_2CF_2O)CF_2CF_2\text{-}Y^3$,

$CH_2=CFCF_2OCF_2CF_2CH_2\text{-}Y^3$,

$CH_2=CFCF_2O(CF_2CF_2CF_2O)CF_2CF_2CH_2\text{-}Y^3$,

$CH_2=CFCF_2OCF_2\text{-}Y^3$, $CH_2=CFCF_2O(CF_2CF_2O)CF_2\text{-}Y^3$,

$CH_2=CFCF_2OCF_2CH_2\text{-}Y^3$,

$CH_2=CFCF_2O(CF_2CF_2O)CF_2CH_2\text{-}Y^3$,

and, in particular,

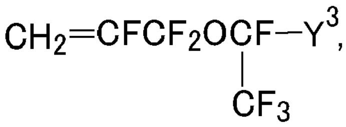, 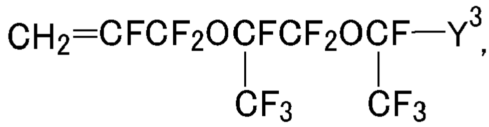,

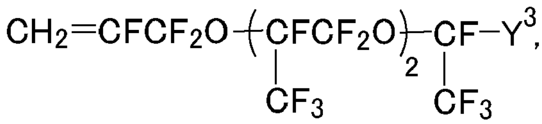, 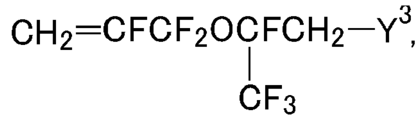,

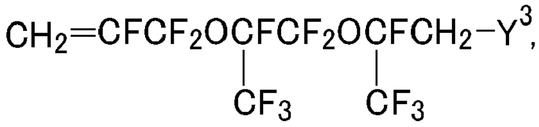, 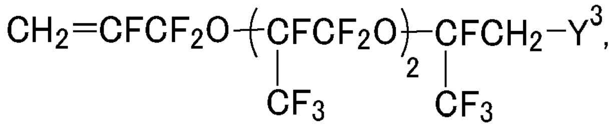,

are preferable.

In the compound represented by general formula (5a), $Y^3$ in formula (5a) is preferably -COOM, and, in particular, is preferably at least one selected from the group consisting of $CH_2=CFCF_2OCF(CF_3)COOM$ and $CH_2=CFCF_2OCF(CF_3)CF_2OCF(CF_3)COOM$ (wherein M is as defined above), and more preferably $CH_2=CFCF_2OCF(CF_3)COOM$.

The compound represented by general formula (5) is preferably a compound (5b) represented by general formula (5b):

$$CX^2_2=CFCF_2\text{-}O\text{-}(CF(CF_3)CF_2O)_{n5}\text{-}CF(CF_3)\text{-}Y^3 \qquad (5b)$$

wherein each $X^2$ is the same and represents F or H, n5 represents an integer of 0 or 1 to 10, and $Y^3$ is as defined above.

In formula (5b), n5 is preferably an integer of 0 or 1 to 5 in terms of the stability of the resulting aqueous dispersion, more preferably 0, 1, or 2, and even more preferably 0 or 1. $Y^3$ is preferably -COOM because appropriate water solubility and the stability of the aqueous dispersion are obtained, and M is preferably H or $NH_4$ because the compound unlikely remains as impurities, and the heat resistance of the resulting formed article is improved.

Examples of the compound represented by formula (5b) include $CH_2=CFCF_2OCF(CF_3)COOM$ and $CH_2=CFCF_2OCF(CF_3)CF_2OCF(CF_3)COOM$ wherein M is as defined above.

Examples of the compound represented by general formula (5) include compounds represented by general formula (5c):

$$CF_2=CFCF_2\text{-}O\text{-}Rf\text{-}Y^3 \qquad (5c)$$

wherein Rf and $Y^3$ are as described above.

More specific examples include:

$CF_2CFCF_2OCF_2CF_2CF_2\text{-}Y^3$,

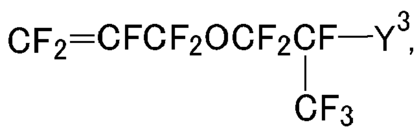,

$CF_2=CFCF_2OCF_2CF_2CF_2CH_2\text{-}Y^3$,

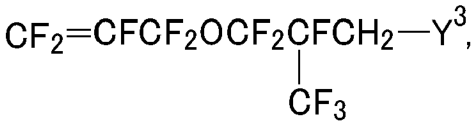

In general formula (6), X is -H or -F. X may be both - F, or at least one may be -H. For example, one may be -F and the other may be -H, or both may be -H.

In general formula (6), Y is -H, -F, an alkyl group, or a fluorine-containing alkyl group.

The alkyl group is an alkyl group not containing a fluorine atom, and has one or more carbon atoms. The number of carbon atoms in the alkyl group is preferably 6 or less, more preferably 4 or less, and even more preferably 3 or less.

The fluorine-containing alkyl group is an alkyl group that contains at least one fluorine atom, and has one or more carbon atoms. The number of carbon atoms in the fluorine-containing alkyl group is preferably 6 or less, more preferably 4 or less, and even more preferably 3 or less.

Y is preferably -H, -F, or $-CF_3$, and -F is more preferable.

In general formula (6), at least one of X and Y preferably includes a fluorine atom. For example, X may be -H, and Y and Z may be -F.

In general formula (6), Rf is a fluorine-containing alkylene group having 1 to 40 carbon atoms or a fluorine-containing alkylene group having 2 to 100 carbon atoms and having an ether bond.

The fluorine-containing alkylene group preferably has two or more carbon atoms. The number of carbon atoms in the fluorine-containing alkyl group is preferably 30 or less, more preferably 20 or less, and even more preferably 10 or less. Examples of the fluorine-containing alkylene group include - $CF_2$-, $-CH_2CF_2$-, $-CF_2CF_2$-, $-CF_2CH_2$-, $-CF_2CF_2CH_2$-, $-CF(CF_3)$-, - $CF(CF_3)CF_2$-, and $-CF(CF_3)CH_2$-. The fluorine-containing alkylene group is preferably a perfluoroalkylene group.

In general formula (6), $Y^3$ is preferably -COOM, $-SO_3M$, or $-OSO_3M$ (wherein M is H, a metal atom, $NR^{7y}{}_4$, optionally substituted imidazolium, optionally substituted pyridinium, or optionally substituted phosphonium; and $R^{7y}$ may be the same or different and is H or an organic group, and any two may be bonded to each other to form a ring).

The organic group of $R^{7y}$ is preferably an alkyl group. $R^{7y}$ is preferably H or a $C_{1-10}$ organic group, more preferably H or a $C_{1-4}$ organic group, and even more preferably H or a $C_{1-4}$ alkyl group.

Examples of the metal atom include alkali metals (Group 1) and alkaline earth metals (Group 2), and Na, K, or Li is preferable.

M is preferably -H, a metal atom, or $NR^7{}_4$, more preferably -H, an alkali metal (Group 1), an alkaline earth metal (Group 2), or $NR^7{}_4$, even more preferably -H, -Na, -K, -Li, or $NH_4$, yet more preferably -H, -Na, -K, or $NH_4$, particularly preferably - H, -Na, or $NH_4$, and most preferably -H or $-NH_4$.

$Y^3$ is preferably -COOM or $-SO_3M$, and more preferably - COOM.

The compound represented by general formula (6) is preferably at least one selected from the group consisting of compounds represented by general formulae (6a), (6b), (6c), (6d), and (6e):

$CF_2=CF-O-(CF_2)_{n1}-Y^3$ (6a)

wherein n1 represents an integer of 1 to 10, and $Y^3$ is as defined above;

$CF_2=CF-O-(CF_2C(CF_3)F)_{n2}-Y^3$ (6b)

wherein n2 represents an integer of 1 to 5, and $Y^3$ is as defined above;

$CF_2=CF-O-(CFX^1)_{n3}-Y^3$ (6c)

wherein $X^1$ represents F or $CF_3$, n3 represents an integer of 1 to 10, and $Y^3$ is as defined above;

$CF_2=CF-O-(CF_2CFX^1O)_{n4}-(CF_2)_{n6}-Y^3$ (6d)

wherein n4 represents an integer of 1 to 10, n6 represents an integer of 1 to 3, and $Y^3$ and $X^1$ are as defined above; and

$CF_2=CF-O-(CF_2CF_2CFX^1O)_{n3}-CF_2CF_2CF_2-Y^3$ (6e)

wherein n5 represents an integer of 0 to 10, and $Y^3$ and $X^1$ are as defined above.

In formula (6a), n1 is preferably an integer of 5 or less, and more preferably an integer of 2 or less. $Y^3$ is preferably -COOM or $-SO_3M$ because appropriate water solubility and the stability of the aqueous dispersion are obtained, and M is

preferably H or $NH_4$ because the compound unlikely remains as impurities, and the heat resistance of the resulting formed article is improved.

Examples of the compound represented by formula (6a) include $CF_2=CF-O-CF_2COOM$, $CF_2=CF(OCF_2CF_2COOM)$, $CF_2=CF(OCF_2CF_2CF_2COOM)$, $CF_2=CF-O-CF_2SO_3M$, $CF_2=CF(OCF_2CF_2SO_3M)$, and $CF_2=CF(OCF_2CF_2CF_2SO_3M)$ wherein M is as defined above.

In formula (6b), n2 is preferably an integer of 3 or less in terms of the stability of the resulting aqueous dispersion, $Y^3$ is preferably -COOM or $-SO_3M$ because appropriate water solubility and the stability of the aqueous dispersion are obtained, and M is preferably H or $NH_4$ because the compound unlikely remains as impurities, and the heat resistance of the resulting formed article is improved.

In formula (6c), n3 is preferably an integer of 5 or less in terms of water solubility, $Y^3$ is preferably -COOM or $-SO_3M$ because appropriate water solubility and the stability of the aqueous dispersion are obtained, and M is preferably H or $NH_4$ because dispersion stability is improved.

In formula (6d), $X^1$ is preferably $-CF_3$ in terms of the stability of the aqueous dispersion, n4 is preferably an integer of 5 or less in terms of water solubility, $Y^3$ is preferably -COOM or $-SO_3M$ because appropriate water solubility and the stability of the aqueous dispersion are obtained, and M is preferably H or $NH_4$.

Examples of the compound represented by formula (6d) include $CF_2=CFOCF_2CF(CF_3)OCF_2CF_2COOM$, $CF_2=CFOCF_2CF(CF_3)OCF_2COOM$, $CF_2=CFOCF_2CF(CF_3)OCF_2CF_2CF_2COOM$, $CF_2=CFOCF_2CF(CF_3)OCF_2CF_2SO_3M$, $CF_2=CFOCF_2CF(CF_3)OCF_2SO_3M$, and $CF_2=CFOCF_2CF(CF_3)OCF_2CF_2CF_2SO_3M$ wherein M represents H, $NH_4$, or an alkali metal.

In formula (6e), n5 is preferably an integer of 5 or less in terms of water solubility, $Y^3$ is preferably -COOM or $-SO_3M$ because appropriate water solubility and the stability of the aqueous dispersion are obtained, and M is preferably H or $NH_4$.

Examples of the compound represented by general formula (6e) include $CF_2=CFOCF_2CF_2CF_2COOM$ and $CF_2=CFOCF_2CF_2CF_2SO_3M$ wherein M represents H, $NH_4$, or an alkali metal.

In general formula (7), Rf is preferably a fluorine-containing alkylene group having 1 to 40 carbon atoms. In general formula (7), at least one of X and Y preferably includes a fluorine atom.

The compound represented by general formula (7) is preferably at least one selected from the group consisting of compounds represented by general formula (7a):

$$CF_2=CF-(CF_2)_{n1}-Y^3 \qquad (7a)$$

wherein n1 represents an integer of 1 to 10, and $Y^3$ is as defined above; and compounds represented by general formula (7b):

$$CF_2=CF-(CF_2C(CF_3)F)_{n2}-Y^3 \qquad (7b)$$

wherein n2 represents an integer of 1 to 5, and $Y^3$ is as defined above.

$Y^3$ is preferably $-SO_3M$ or -COOM, and M is preferably H, a metal atom, $NR^{7y}_4$, optionally substituted imidazolium, optionally substituted pyridinium, or optionally substituted phosphonium. $R^{7y}$ is H or an organic group.

In formula (7a), n1 is preferably an integer of 5 or less, and more preferably an integer of 2 or less. $Y^3$ is preferably -COOM or $-SO_3M$ because appropriate water solubility and the stability of the aqueous dispersion are obtained, and M is preferably H or $NH_4$ because the compound unlikely remains as impurities, and the heat resistance of the resulting formed article is improved. Examples of the compound represented by formula (7a) include $CF_2=CFCF_2COOM$ and $CF_2=CFCF_2SO_3M$ wherein M is as defined above.

In formula (7b), n2 is preferably an integer of 3 or less in terms of the stability of the resulting aqueous dispersion, $Y^3$ is preferably -COOM or $-SO_3M$ because appropriate water solubility and the stability of the aqueous dispersion are obtained, and M is preferably H or $NH_4$ because the compound unlikely remains as impurities, and the heat resistance of the resulting formed article is improved.

The modifying monomer preferably contains the modifying monomer (A), and preferably contains at least one compound selected from the group consisting of compounds represented by general formula (5a), general formula (5c), general formula (6a), general formula (6b), general formula (6c), and general formula (6d), and more preferably contains a compound represented by general formula (5a) or general formula (5c).

When using the modifying monomer (A) as a modifying monomer, the content of the modifying monomer (A) unit is preferably in a range of 0.00001 to 1.0% by mass based on all polymerization units of the TFE polymer (PTFE). The lower limit is more preferably 0.0001% by mass, even more preferably 0.0005% by mass, yet more preferably 0.001% by mass, and further preferably 0.005% by mass. The upper limit, in ascending order of preference, is 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

The aqueous dispersion of the TFE polymer is also preferably used in various applications as a composition to which an organic or inorganic filler is added depending on the purpose. The composition, by being coated onto a substrate made of metal or ceramic, can create a coating surface having non-stickiness and a low coefficient of friction as well as excellent gloss, smoothness, abrasion resistance, weather resistance, and heat resistance, and is thus suitable, for example, for coating rolls and cooking utensils and for impregnating glass cloth.

An organosol of the TFE polymer can also be prepared from the aqueous dispersion. The organosol can contain the TFE polymer and an organic solvent, examples of the organic solvent include ether solvents, ketone solvents, alcohol solvents, amide solvents, ester solvents, aliphatic hydrocarbon solvents, aromatic hydrocarbon solvents, and halogenated hydrocarbon solvents, and N-methyl-2-pyrrolidone and dimethylacetamide can be preferably used. Preparation of the organosol can be carried out by, for example, the method described in International Publication No. WO 2012/002038.

The aqueous dispersion of the TFE polymer is also preferably used as a processing aid. When used as a processing aid, the aqueous dispersion is mixed with a host polymer or the like, thus making it possible to improve melt strength during melt processing of the host polymer, and improve the mechanical strength, electrical characteristics, flame retardancy, drip prevention during combustion, and sliding properties of the resulting polymer.

The aqueous dispersion of the TFE polymer is also preferably used as a binder for batteries and in dust-preventing applications.

The aqueous dispersion of the TFE polymer is also preferably used as a processing aid after being combined with a resin other than the TFE polymer. The aqueous dispersion is suitable as a feedstock for PTFE described in, for example, Japanese Patent Laid-Open No. 11-49912, U.S. Patent No. 5804654, Japanese Patent Laid-Open No. 11-29679, and Japanese Patent Laid-Open No. 2003-2980. The processing aid containing the aqueous dispersion is not inferior in any way to the processing aids described in the above publications.

The aqueous dispersion of the TFE polymer is also preferably mixed with an aqueous dispersion of a melt-fabricable fluororesin to co-precipitate and thus form a co-precipitated powder. The co-precipitated powder is suitable as a processing aid.

Examples of the melt-fabricable fluororesin include FEP, PFA, TFE/perfluoroallyl ether copolymer, ETFE, and ethylene/TFE/HFP copolymer [EFEP], and, in particular, PFA or FEP is preferable.

The aqueous dispersion also preferably contains the melt-fabricable fluororesin. Examples of the melt-fabricable fluororesin include FEP, PFA, TFE/perfluoroallyl ether copolymer, ETFE, and EFEP. The aqueous dispersion containing the melt-fabricable fluororesin can be used as a coating material. The melt-fabricable fluororesin allows sufficient fusion of particles of the TFE polymer, thereby improving film formability and imparting gloss to the resulting film.

The aqueous dispersion of the TFE polymer is also preferably used as a dust suppressor. The dust suppressor can be used in methods for suppressing dust from a dust-generating material by mixing the dust suppressor with the dust-generating material and subjecting the mixture to compression-shearing action at a temperature of 20 to 200°C to fibrillate the TFE polymer, such as methods described in Japanese Patent Nos. 2827152 and 2538783.

The aqueous dispersion of the TFE polymer can be suitably used in, for example, the dust suppressor composition described in International Publication No. WO 2007/004250, and can also be suitably used in the dust suppressing method described in International Publication No. WO 2007/000812.

The dust suppressor is suitably used in dust-suppressing treatment in the building material field, soil stabilizer field, solidification material field, fertilizer field, field of landfill disposal of incinerator ash and hazardous substances, explosion prevention field, cosmetics field, and pet waste sand such as cat litter.

The aqueous dispersion of the TFE polymer is also preferably used as a feedstock for obtaining a TFE polymer fiber by dispersion spinning method. The dispersion spinning method is a method for obtaining a TFE polymer fiber by mixing the aqueous dispersion of the TFE polymer with an aqueous dispersion of a matrix polymer, extruding the mixture to form an intermediate fiber structure, and firing the intermediate fiber structure to degrade the matrix polymer and sinter TFE polymer particles.

By the production method of the present disclosure, low molecular weight PTFE can also be produced.

Low molecular weight PTFE may be produced by polymerization, or may be produced by reducing the molecular weight of high molecular weight PTFE obtained by polymerization using a known method (such as thermal degradation or radiation-induced degradation).

Low molecular weight PTFE having a molecular weight of 600,000 or less (also referred to as PTFE micropowder) has excellent chemical stability, extremely low surface energy, and resistance to fibrillation, and is thus suitable as an additive intended to, for example, improve lubricity and the texture of a coating surface in the production of plastics, inks, cosmetics, coating materials, greases, office automation equipment components, toners, and the like (see, for example, Japanese Patent Laid-Open No. 10-147617).

Low molecular weight PTFE may also be obtained by polymerizing TFE, or TFE and a monomer that is copolymerizable with TFE, in the presence of a chain transfer agent. In this case, the chain transfer agent is preferably at least one selected from the group consisting of alkanes having 2 to 4 carbon atoms. Specifically, methane, ethane, propane, butane, and isobutane are more preferable, and ethane and propane are even more preferable. In this case, the

amount of the chain transfer agent is preferably 10 ppm by mass or more, or more than 10 ppm by mass, based on the aqueous medium.

When using low molecular weight PTFE obtained by the polymerization as a powder, powder particles can be obtained by coagulating the aqueous dispersion.

Herein, high molecular weight PTFE refers to PTFE that is non melt-processable and is fibrillatable. On the other hand, low molecular weight PTFE refers to PTFE that is melt-fabricable and is not fibrillatable.

The term "non melt-processible" refers to a property that the melt flow rate cannot be measured at a temperature higher than the crystal melting point in accordance with ASTM D 1238 and D 2116.

The presence or absence of fibrillatability can be determined by "paste extrusion", which is a representative method for forming a "high molecular weight PTFE powder" which is a powder made from a TFE polymer. Usually, this is because the fibrillatability of high molecular weight PTFE enables paste extrusion. If an unfired formed article obtained by paste extrusion lacks substantial strength or elongation, e.g., if it exhibits 0% elongation and breaks when pulled, such an article can be regarded as lacking fibrillatability.

High molecular weight PTFE preferably has a standard specific gravity (SSG) of 2.130 to 2.280. Standard specific gravity is measured by the water replacement method in accordance with ASTM D 792 using a sample formed in accordance with ASTM D4895-89. Herein, "high molecular weight" means that the standard specific gravity is within the above range.

Low molecular weight PTFE has a melt viscosity at 380°C of $1\times10^2$ to $7\times10^5$ Pa.s. Herein, "low molecular weight" means that the melt viscosity is within the above range. Melt viscosity is measured in accordance with ASTM D 1238 using a flow tester (manufactured by Shimadzu Corporation) and a 2φ-8L die when a 2 g sample preheated in advance at 380°C for 5 minutes is subjected to a load of 0.7 MPa while maintaining that temperature.

High molecular weight PTFE has an extremely higher melt viscosity than low molecular weight PTFE, and it is difficult to accurately measure the melt viscosity thereof. On the other hand, the melt viscosity of low molecular weight PTFE can be measured, but it is difficult to obtain a formed article from low molecular weight PTFE that is usable in the measurement of standard specific gravity, and is thus difficult to accurately measure the standard specific gravity thereof. Accordingly, standard specific gravity is used herein as an index of the molecular weight of high molecular weight PTFE, and melt viscosity is used as an index of the molecular weight of low molecular weight PTFE. No measurement method is known that is capable of directly determining the molecular weight of any of high molecular weight PTFE and low molecular weight PTFE.

The peak temperature of high molecular weight PTFE is preferably 333 to 347°C and more preferably 335 to 345°C. The peak temperature of low molecular weight PTFE is preferably 322 to 333°C and more preferably 324 to 332°C. The peak temperature can be identified as a temperature corresponding to the maximum value appearing in a differential thermal analysis (DTA) curve obtained by raising the temperature of PTFE, which has no history of being heated to a temperature of 300°C or higher, under a condition of 10°C/min using TG-DTA (a thermogravimetric - differential thermal analyzer).

The peak temperature of PTFE may be 322 to 347°C.

When PTFE is high molecular weight PTFE, the upper limit of the peak temperature of PTFE may be 347°C or lower, 346°C or lower, 345°C or lower, 344°C or lower, 343°C or lower, 342°C or lower, 341°C or lower, or 340°C or lower.

When PTFE is high molecular weight PTFE, the lower limit of the peak temperature of PTFE may be 333°C or higher, or 335°C or higher.

When PTFE is low molecular weight PTFE, the upper limit of the peak temperature of PTFE may be 333°C or lower, or 332°C or lower.

When PTFE is low molecular weight PTFE, the lower limit of the peak temperature of PTFE may be 322°C or higher, or 324°C or higher.

The average primary particle size of primary particles of low molecular weight PTFE is preferably 10 to 300 nm, more preferably 50 nm or more, even more preferably 100 nm or more, and yet more preferably 150 nm or more, and is more preferably 250 nm or less. A relatively small average primary particle size of primary particles can be obtained by, for example, adding a modifying monomer to the polymerization system during the initial stage of TFE polymerization.

The average primary particle size of primary particles of low molecular weight PTFE can be measured by dynamic light scattering. The average primary particle size can be measured by, first, preparing an aqueous dispersion of low molecular weight PTFE, the polymer solid concentration of which is regulated to about 1.0% by mass, and performing dynamic light scattering at a measurement temperature of 25°C, a solvent (water) refractive index of 1.3328, a solvent (water) viscosity of 0.8878 mPa·s, and a cumulative number of measurement runs of 70. In dynamic light scattering, for example, ELSZ-1000S (manufactured by Otsuka Electronics Co., Ltd.) can be used.

The average primary particle size can also be measured by the following method. The dispersion is diluted with water to a solid concentration of 0.15% by mass, the transmittance of projected light at 550 nm per unit length of the resulting diluted latex and the number-based length-average particle size determined by measuring the directional diameter using a transmission electron micrograph are measured to create a calibration curve. By using this calibration

curve, the average particle size can be determined from the measured transmittance of the projected light at 550 nm of each sample.

Preferably, high molecular weight PTFE has at least one endothermic peak in a range of 333 to 347°C on a heat-of-fusion curve with a temperature-increasing rate of 10°C/min using a differential scanning calorimeter (DSC) for PTFE which has not been heated up to 300°C or higher, and has an enthalpy of fusion of 52 mJ/mg or higher at 290 to 350°C calculated from the heat-of-fusion curve. PTFE has an enthalpy of fusion of more preferably 55 mJ/mg or higher, and even more preferably 58 mJ/mg or higher.

(II) Melt-fabricable fluororesin

(1) In the production method of the present disclosure, the polymerization of FEP is preferably carried out at a polymerization temperature of 10 to 150°C at a polymerization pressure of 0.3 to 6.0 MPaG.

A preferable monomer composition (% by mass) of FEP is TFE:HFP = (60-95): (5-40), and more preferably (85-92): (8-15).

In addition to TFE and HFP, by polymerizing these monomers with a further monomer that is copolymerizable therewith, FEP may be obtained as a copolymer of TFE, HFP, and the further monomer. Examples of the further monomer include the above-described fluoromonomers (provided that TFE and HFP are excluded) and fluorine-free monomers. One further monomer or multiple further monomers may be used. Among the further monomers, perfluoro(alkyl vinyl ether) is preferable. The content of the further-monomer unit in FEP may be 0.1 to 2% by mass based on all monomer units.

In the polymerization of FEP, it is preferable to use cyclohexane, methanol, ethanol, propanol, ethane, propane, butane, pentane, hexane, carbon tetrachloride, chloroform, methylene chloride, or methyl chloride as a chain transfer agent, and it is preferable to use ammonium carbonate or disodium hydrogen phosphate as a pH buffer.

(2) In the production method of the present disclosure, the polymerization of a TFE/perfluoro(alkyl vinyl ether) copolymer, such as PFA or MFA, and a TFE/perfluoroallyl ether copolymer is preferably carried out at a polymerization temperature of 10 to 100°C at a polymerization pressure of 0.3 to 6.0 MPaG.

A preferable monomer composition (mol%) of the TFE/perfluoro(alkyl vinyl ether) copolymer is TFE:perfluoro(alkyl vinyl ether) = (90 to 99.7):(0.3 to 10), and more preferably (97 to 99):(1 to 3). Perfluoro(alkyl vinyl ether) may be preferably a compound represented by the formula: $CF_2=CFORf^4$ wherein $Rf^4$ is a perfluoroalkyl group having 1 to 6 carbon atoms.

In addition to TFE and perfluoro(alkyl vinyl ether), by polymerizing these monomers and a further monomer that is copolymerizable therewith, a copolymer of TFE, perfluoro(alkyl vinyl ether), and a further monomer may be obtained as a TFE/perfluoro(alkyl vinyl ether) copolymer. Examples of the further monomer include the above-described fluoromonomers (provided that TFE and perfluoro(alkyl vinyl ether) are excluded) and fluorine-free monomers. One further monomer or multiple further monomers may be used. The content of the further-monomer unit in the TFE/perfluoro(alkyl vinyl ether) copolymer may be 0.1 to 2% by mass based on all monomer units.

A preferable monomer composition (mol%) of the TFE/perfluoroallyl ether copolymer is TFE:perfluoroallyl ether copolymer = (90 to 99.7):(0.3 to 10), and more preferably (97 to 99):(1 to 3). A preferable perfluoroallyl ether may be a compound represented by the formula: $CF_2=CFCF_2ORf^4$ wherein $Rf^4$ is a perfluoroalkyl group having 1 to 6 carbon atoms.

In addition to TFE and perfluoroallyl ether, by polymerizing these monomers and a further monomer that is copolymerizable therewith, a copolymer of TFE, perfluoroallyl ether, and a further monomer may be obtained as a TFE/perfluoroallyl ether copolymer. Examples of the further monomer include the above-described fluoromonomers (provided that TFE and perfluoroallyl ether are excluded) and fluorine-free monomers. One further monomer or multiple further monomers may be used. The content of the further-monomer unit in the TFE/perfluoroallyl ether copolymer may be 0.1 to 2% by mass based on all monomer units.

In the polymerization of the TFE/perfluoro(alkyl vinyl ether) copolymer and the TFE/perfluoroallyl ether copolymer, it is preferable to use cyclohexane, methanol, ethanol, propanol, propane, butane, pentane, hexane, carbon tetrachloride, chloroform, methylene chloride, methyl chloride, methane, or ethane as a chain transfer agent, and it is preferable to use ammonium carbonate or disodium hydrogen phosphate as a pH buffer.

Moreover, a primer composition can be obtained by suitably adding a nonionic surfactant to the aqueous dispersion of the TFE/perfluoro(alkyl vinyl ether) copolymer, such as PFA or MFA, and the TFE/perfluoroallyl ether copolymer, and, if necessary, dissolving or dispersing polyethersulfone, polyamideimide and/or polyimide, and metal powder in an organic solvent. This primer composition can also be used in a method for coating a metal surface with a fluororesin, wherein the primer composition is applied to a metal surface, applying a melt-fabricable fluororesin composition onto the thus-formed primer layer, and firing the layer of the melt-fabricable fluororesin composition together with the primer layer.

(3) In the production method of the present disclosure, the polymerization of ETFE is preferably carried out at a polymerization temperature of 10 to 100°C at a polymerization pressure of 0.3 to 2.0 MPaG.

A preferable monomer composition (mol%) of ETFE is TFE:ethylene = (50 to 99):(50 to 1).

In addition to ethylene and TFE, by polymerizing these monomers with a further monomer that is copolymerizable therewith, a copolymer of ethylene, TFE, and a further monomer may be obtained as ETFE. Examples of the further monomer include the above-described fluoromonomers (provided that TFE is excluded) and fluorine-free monomers (provided that ethylene is excluded). One further monomer or multiple further monomers may be used.

The further monomer is preferably hexafluoropropylene, perfluorobutylethylene, perfluorohexylethylene, 3,3,4,4,5,5,6,6,7,7,8,8,8-tridecafluorooct-1-ene, 2,3,3,4,4,5,5-heptafluoro-1-pentene ($CH_2=CFCF_2CF_2CF_2H$), and 2-trifluoromethyl-3,3,3-trifluoropropene ($(CF_3)_2CF=CH_2$).

The content of the further-monomer unit in ETFE may be 0 to 20% by mass based on all monomer units. A preferable mass ratio is TFE:ethylene:further monomer = (63 to 94): (27 to 2):(1 to 10).

In the polymerization of ETFE, it is preferable to use cyclohexane, methanol, ethanol, propanol, ethane, propane, butane, pentane, hexane, carbon tetrachloride, chloroform, methylene chloride, or methyl chloride as a chain transfer agent.

(4) An electrolyte polymer precursor can also be produced by using the production method disclosed herein. In the production method of the present disclosure, the polymerization of the electrolyte polymer precursor is preferably carried out at a polymerization temperature of 10 to 100°C at a polymerization pressure of 0.1 to 2.0 MPaG. The electrolyte polymer precursor is a polymer composed of a monomer containing a functional group represented by $-SO_2X^{151}$,$-COZ^{151}$, or $-POZ^{152}Z^{153}$ (wherein $X^{151}$, $Z^{151}$, $Z^{152}$, and $Z^{153}$ are as will be described below), and can be converted into an ion-exchangeable polymer through hydrolysis treatment.

Examples of the monomer for use in the electrolyte polymer precursor include fluorine-containing monomers represented by:

General formula (150): $CF_2=CF-O-(CF_2CFY^{151}-O)_n-(CFY^{152})_m- A^{151}$

wherein $Y^{151}$ represents a fluorine atom, a chlorine atom, an-$SO_2F$ group, or a perfluoroalkyl group, the perfluoroalkyl group may contain etheric oxygen and an $-SO_2F$ group, n represents an integer of 0 to 3, n $Y^{151}$ groups may be the same or different, $Y^{152}$ represents a fluorine atom, a chlorine atom, or an $-SO_2F$ group, m represents an integer of 1 to 5, m $Y^{152}$ groups may be the same or different, $A^{151}$ represents $-SO_2X^{151}$, $-COZ^{151}$, or-$POZ^{152}Z^{153}$, $X^{151}$ represents F, Cl, Br, I, $-OR^{151}$, or $-NR^{152}R^{153}$, $Z^{151}$, $Z^{152}$, and $Z^{153}$ are the same or different, and represent-$NR^{154}R^{155}$ or $-OR^{156}$, and $R^{151}$, $R^{152}$, $R^{153}$, $R^{154}$, $R^{155}$, and $R^{156}$ are the same or different, and represent H, ammonium, an alkali metal, an alkyl group optionally containing a fluorine atom, an aryl group, or a sulfonyl-containing group. Examples of the monomer for use in the electrolyte polymer precursor include compounds containing two fluorosulfonyl groups as described in International Publication No. WO 2007/013532 and perfluoromonomers having an $-SO_2F$ group and a dioxolane ring as described in International Publication No. WO 2014/175123. The monomer composition (mol%) of the electrolyte polymer precursor is preferably TFE:vinyl ether = (50 to 99):(50 to 1) and more preferably TFE:vinyl ether = (50 to 93):(50 to 7).

The electrolyte polymer precursor may be modified with a third monomer within a range of 0 to 20% by mass of all monomers. Examples of the third monomer include CTFE, vinylidene fluoride, perfluoroalkyl vinyl ether, perfluorobutenyl vinyl ether; cyclic monomers such as perfluoro-2,2-dimethyl-1,3-dioxolane and perfluoro-2-methylene-4-methyl-1,3-dioxole; and polyfunctional monomers such as divinylbenzene.

The electrolyte polymer precursor thus obtained can be used as a polymer electrolyte membrane in fuel cells, electrolytic devices, redox flow batteries, and the like, for example, after being formed into a film, hydrolyzed with an alkaline solution, and treated with mineral acid.

An electrolyte polymer dispersion can be obtained by performing hydrolysis with an alkaline solution while maintaining the dispersed state of the electrolyte polymer precursor.

Subsequently, heating the dispersion to 120°C or higher in a pressure vessel enables the dispersion to be dissolved in, for example, a water/alcohol mixed solvent to form a solution.

The solution thus obtained can be used as, for example, a binder for electrodes, or combined with various additives and cast to form a film for use in, for example, antifouling coating films or organic actuators.

(5) TFE/VDF copolymer

In the production method of the present disclosure, the polymerization temperature of the TFE/VDF copolymer is not limited, and may be 0 to 100°C. The polymerization pressure is suitably determined according to other polymerization conditions such as polymerization temperature, and is usually in a range of 0 to 9.8 MPaG.

A preferable monomer composition (mol%) of the TFE/VDF copolymer is TFE:VDF = (5 to 90):(95 to 10). The TFE/VDF copolymer may be modified with a third monomer within a range of 0 to 50 mol% of all monomers. Preferably, the

monomer composition is TFE:ethylene:third monomer = (30 to 85):(10 to 69.9): (0.1 to 10).

The third monomer is preferably a monomer represented by:

formula: $CX^{11}X^{12}=CX^{13}(CX^{14}X^{15})_{n11}X^{16}$

wherein $X^{11}$ to $X^{16}$ are the same or different and represent H, F, or Cl, and n11 represents an integer of 0 to 8, provided that TFE and VDF are excluded; or a monomer represented by

formula: $CX^{21}X^{22}=CX^{23}-O(CX^{24}X^{25})_{n21}X^{26}$

wherein $X^{21}$ to $X^{26}$ are the same or different and represent H, F, or Cl, and n21 represents an integer of 0 to 8.

The third monomer may be a fluorine-free ethylenic monomer. The fluorine-free ethylenic monomer is preferably selected from ethylenic monomers having 6 or fewer carbon atoms in terms of maintaining heat resistance and chemical resistance. Examples include ethylene, propylene, 1-butene, 2-butene, vinyl chloride, vinylidene chloride, alkyl vinyl ethers (such as methyl vinyl ether, ethyl vinyl ether, and propyl vinyl ether), maleic acid, itaconic acid, 3-butenoic acid, 4-pentenoic acid, vinyl sulfonic acid, acrylic acid, and methacrylic acid.

The aqueous dispersion of the TFE/VDF copolymer is also preferably used as a composite porous membrane by being coated onto a porous substrate composed of a polyolefin resin. The aqueous dispersion is also preferably used as a composite porous membrane by causing inorganic particles and/or organic particles to be dispersed in the aqueous dispersion and coating the mixture onto a porous substrate. The composite porous membrane thus obtained can be used as, for example, a separator in lithium-ion secondary batteries.

While embodiments have been described above, it will be understood that various changes in form and detail can be made without departing from the gist and scope of the claims.

<1> According to the first aspect of the present disclosure, provided is
a method for producing a fluoropolymer, the method comprising:

polymerizing a fluoromonomer in the presence of a polymerization initiator and an aqueous medium in a reactor to prepare a composition containing the aqueous medium and the fluoropolymer, and
bringing the composition into contact with a gas containing at least oxygen.

<2> According to the second aspect of the present disclosure, provided is
the production method according to the first aspect, wherein an amount of dissolved oxygen in the composition is 0.001 mg/L or more when bringing the composition into contact with the gas.
<3> According to the third aspect of the present disclosure, provided is
the production method according to the first or second aspect, wherein an oxygen concentration in a gas phase in the reactor is regulated to 20 ppm by volume or less when polymerizing the fluoromonomer.
<4> According to the fourth aspect of the present disclosure, provided is
the production method according to any one of the first to third aspects, wherein a temperature of the composition is regulated to 30°C or higher when bringing the composition into contact with the gas.
<5> According to the fifth aspect of the present disclosure, provided is
the production method according to any one of the first to fourth aspects, wherein a temperature of the composition is regulated to 85°C or lower when bringing the composition into contact with the gas.
<6> According to the sixth aspect of the present disclosure, provided is
the production method according to any one of the first to fifth aspects, wherein bubbles are created in the composition by stirring the composition when bringing the composition into contact with the gas.
<7> According to the seventh aspect of the present disclosure, provided is
the production method according to any one of the first to sixth aspects, wherein the composition is stirred at a power number of 0.3 or more when bringing the composition into contact with the gas.
<8> According to the eighth aspect of the present disclosure, provided is
the production method according to any one of the first to seventh aspects, wherein the time of contact between the composition and the gas is one minute or longer.
<9> According to the ninth aspect of the present disclosure, provided is
the production method according to any one of the first to eighth aspects, wherein after preparing the composition, the fluoromonomer is removed from the reactor, and then the gas is fed to the reactor.
<10> According to the tenth aspect of the present disclosure, provided is
the production method according to any one of the first to ninth aspects, wherein the composition is prepared by polymerizing the fluoromonomer while stirring the aqueous medium, and the composition is brought into contact with

the gas while stirring the composition at a stirring speed of -80% or more to +50% or less compared with the stirring speed during the polymerization.

<11> According to the eleventh aspect of the present disclosure, provided is
the production method according to any one of the first to tenth aspects, wherein the fluoromonomer comprises at least tetrafluoroethylene.

<12> According to the twelfth aspect of the present disclosure, provided is
the production method according to any one of the first to eleventh aspects, wherein the fluoromonomer comprises at least perfluoro(alkyl vinyl ether).

<13> According to the thirteenth aspect of the present disclosure, provided is
the production method according to any one of the first to twelfth aspects, wherein the fluoropolymer is at least one selected from the group consisting of polytetrafluoroethylene, tetrafluoroethylene/hexafluoropropylene copolymer, tetrafluoroethylene/hexafluoropropylene/perfluoro(alkyl vinyl ether) copolymer, and tetrafluoroethylene/perfluoro(alkyl vinyl ether) copolymer.

<14> According to the fourteenth aspect of the present disclosure, provided is
the production method according to any one of the first to thirteenth aspects, wherein the fluoropolymer is washed after bringing the composition into contact with the gas.

<15> According to the fifteenth aspect of the present disclosure, provided is
the production method according to any one of the first to fourteenth aspects, wherein the fluoropolymer is dried after bringing the composition into contact with the gas.

<16> According to the sixteenth aspect of the present disclosure, provided is
the production method according to any one of the first to fifteenth aspects, wherein the fluoropolymer is pulverized after bringing the composition into contact with the gas.

<17> According to the seventeenth aspect of the present disclosure, provided is
the production method according to any one of the first to sixteenth aspects, wherein the fluoropolymer is formed into pellets after bringing the composition into contact with the gas.

<18> According to the eighteenth aspect of the present disclosure, provided is

the production method according to any one of the first to seventeenth aspects, wherein
the polymerization initiator is a persulfate;
the fluoromonomer comprises at least tetrafluoroethylene and perfluoro(alkyl vinyl ether);
the fluoropolymer is modified polytetrafluoroethylene, and a total amount of perfluoro(alkyl vinyl ether) unit in the modified polytetrafluoroethylene is 0.00001 to 1% by mass based on all polymerization units of the modified polytetrafluoroethylene;
an oxygen concentration in a gas phase in the reactor is regulated to 20 ppm by volume or less when polymerizing the fluoromonomer;
after preparing the composition, the fluoromonomer in the reactor is replaced with an inert gas, then the gas containing at least oxygen is fed to the reactor, the composition in the reactor is stirred at a power number of 0.3 or more, and the composition is brought into contact with the gas at 30 to 50°C for 15 minutes or longer to thereby regulate an amount of dissolved oxygen in the composition to 0.50 mg/L or more; and
after bringing the composition into contact with the gas, the fluoropolymer is washed, and the washed fluoropolymer is dried to give a powder of the modified polytetrafluoroethylene.

<19> According to the nineteenth aspect of the present disclosure, provided is

a powder of modified polytetrafluoroethylene, wherein
the modified polytetrafluoroethylene has an amount of ΔPPVE of 0.002% by mass or more, and
a content of a fluorine-containing compound having a hydrophilic group, which is represented by general formula (2), is 100 ppb by mass or less based on the mass of the modified polytetrafluoroethylene:

General formula (2): $[C_{n-1}F_{2n-1}COO^{-}]M^{+}$

wherein n is an integer of 9 to 14, and $M^{+}$ represents a cation.

## EXAMPLES

Next, embodiments of the present disclosure will now be described by way of Examples, but the present disclosure is not limited only to the Examples.

Various numerical values in the Examples were measured by the following methods.

<Apparent density>

Apparent density was measured in accordance with JIS K 6892.

<Standard specific gravity (SSG)>

Standard specific gravity was measured by the water replacement method in accordance with ASTM D792 using a sample molded in accordance with ASTM D4894.

<Average particle size (50% cumulative particle size)>

The average particle size was determined by the following laser diffractometry. A dry method was carried out using a HELOS & RODOS system (trade name, manufactured by SYMPATEC). The measurement sample powder was dispersed by compressed air having a dispersing pressure of 2 bar, the shadow of the measurement sample powder projected by a laser was detected by a measurement sensor unit, accordingly the particle size distribution of the measurement sample powder was calculated, and the value of the volume-based average particle size (50% cumulative particle size) d50 was determined. d50 was regarded as being equal to the particle size corresponding to 50% of the cumulative particle size distribution.

<PPVE content>

The content of PPVE was determined from the infrared absorbance obtained by producing a thin-film disk by press-forming PTFE powder and carrying out FT-IR measurement, in which a ratio (absorbance at 995 $cm^{-1}$/absorbance at 935 $cm^{-1}$) was calculated, and the calculated value was multiplied by 0.14.

<Measurement of amount of ΔPPVE>

The thin-film PTFE disk prepared above was heated at 220°C for 3 hours. The heated thin-film disk was cooled to room temperature and then subjected to FT-IR again to measure the composition of PPVE. ΔPPVE was determined by subtracting the PPVE content after heating from the PPVE content before heating. The magnitude of ΔPPVE of PTFE is an index of the amount of PPVE that did not sufficiently undergo a copolymerization reaction with TFE and remains in a monomeric or oligomeric form in PTFE. PTFE obtained when nearly all PPVE subjected to polymerization is copolymerized with TFE has a small ΔPPVE. Also, PTFE that was heat-treated at high temperatures or fluorinated PTFE has a ΔPPVE of 0.000% by mass or a value close to 0.000% by mass.

<Amount of dissolved oxygen (calculated value)>

The amount of oxygen contained in the air introduced into a reactor and dissolved entirely in the deionized water introduced into the reactor was calculated, and regarded as the amount of dissolved oxygen.

<Amount of dissolved oxygen (measured value)>

The probe of a dissolved oxygen sensor was secured inside a container, the container was hermetically sealed, and the sealed container was connected to a reactor. The oxygen inside the container was removed to create a reduced pressure state, the valve connected to the reactor was opened, and the aqueous medium inside the reactor was partially extracted. The amount of dissolved oxygen in the extracted aqueous medium was measured using an optical dissolved oxygen sensor (manufactured by AS ONE Corporation, FDO3800).

<Power number>

Power number Np in a cylindrical stirring tank was determined using the following formula:

Np = A/Re + B((10^3 + 1.2 * Re^0.66)/(10^3 + 3.2 * Re^0.66))^p * (H/D)^(0.35 +b/D) * (sinθ)^1.2

$$Re=nd^2\rho/\mu$$

$$A=14+(b/D)*((670*(d/D-0.6)^2+185))$$

$$B=10^(1.3-4*(b/D-0.5)^2-1.14*(d/D))$$

$$p=1.1+4(b/D)-2.5*(d/D-0.5)^2-7*(b/D)^4$$

wherein

factors relating to the stirring blade include blade length d [m], blade width b [m], blade angle θ [°], and rotational speed n [1/sec],
factors relating to the stirring tank include tank diameter D [m] and liquid depth H [m], and
factors relating to the stirred liquid include liquid density ρ [kg/m^3] and liquid viscosity μ [kg/m sec].

<Measurement of fluorine-containing compound having hydrophilic group>

The content of the fluorine-containing compound having a hydrophilic group contained in the powder was determined as the content of the fluorine-containing compound having a hydrophilic group extracted from the powder.

1. Extraction of fluorine-containing compound having hydrophilic group from powder

First, 10 g (12.6 mL) of methanol was added to 1 g of PTFE powder, and the mixture was subjected to ultrasonic treatment for 120 minutes while being heated at 60°C. After the mixture was left to stand at room temperature, solids were removed, and the extract was obtained.

2. Calibration curve of perfluorocarboxylic acid

Methanol standard solutions of perfluorononanoic acid, perfluorodecanoic acid, perfluoroundecanoic acid, perfluorododecanoic acid, perfluorotridecanoic acid, and perfluorotetradecanoic acid having five known concentration levels were prepared, and measurement was made using a liquid chromatograph-mass spectrometer (Agilent, Ultivo Triple Quadrupole LC-MS). In the respective concentration ranges, first-order approximation was used to create calibration curves from the methanol standard solution concentrations and peak integral values.

Measuring instrument configuration and LC-MS measurement conditions

[Table 1]

Table 1 Measuring instrument configuration and LC-MS measurement conditions

| | | | | |
|---|---|---|---|---|
| LC unit | | | | |
| | Device | 1290 Infinity II manufactured by Agilent | | |
| | Column | Zorbax RRHD Extend-C18 1.8 μm (2.1×50 mm) manufactured by Agilent | | |
| | Mobile phase | A $CH_3CN$ | | |
| | | B 20mM $CH_3COONH_4/H_2O$ | | |
| | | | 0 → 1 min | A:B = 10:90 |
| | | | 1 → 6 min | A:B = 10:90 → A:B = 95:5 Linear gradient |
| | | | 6 → 12 min | A:B = 95:5 |
| | Flow rate | 0.3 ml/min | | |
| | Column temperature | 40°C | | |
| | Sample injection volume | 1 μL | | |

(continued)

| MS unit | | |
|---|---|---|
| | Device | Ultivo LC/TQ manufactured I |
| | Measurement mode | MRM (Multiple Reaction Monitoring) |
| | Ionization method | Electrospray ionization<br>Negative mode |

MRM measurement parameters

[Table 2]

Table 2 MRM measurement parameter

| Compound | Number of carbon atoms | Precursor | Product |
|---|---|---|---|
| Perfluorononanoic acid | 9 | 463 | 419 |
| Perfluorodecanoic acid | 10 | 513 | 469 |
| Perfluoroundecanoic acid | 11 | 563 | 519 |
| Perfluorododecanoic acid | 12 | 613 | 569 |
| Perfluorotridecanoic acid | 13 | 663 | 619 |
| Perfluorotetradecanoic acid | 14 | 713 | 669 |

3. Content of compound represented by general formula (2) contained in powder

The content of the compound that was contained in the extract, had n carbon atoms, and represented by general formula (2) was measured from the calibration curve using a liquid chromatograph-mass spectrometer. The content of the compound that was contained in the powder, had n carbon atoms, and represented by general formula (2) was determined using the following relational expression (2):

$$Yn = Xn \times 12.6 \quad (2)$$

Yn: Content (ppb by mass/powder) of compound contained in powder, having n carbon atoms, and represented by general formula (2)
Xn: Content (ng/mL) of compound contained in extract, having n carbon atoms, and represented by general formula (2)

The lower limit of quantifying the content of the compound contained in the powder, having n carbon atoms, and represented by general formula (2) is 1 ppb by mass/powder.

MRM measurement parameters

[Table 3]

Table 3 MRM measurement parameter

| Compound | Number of carbon atoms | Precursor | Product |
|---|---|---|---|
| $[C_8F_{17}COO^-]M^+$ | 9 | 463 | 419 |
| $[C_9F_{19}COO^-]M^+$ | 10 | 513 | 469 |
| $[C_{10}F_{21}COO^-]M^+$ | 11 | 563 | 519 |
| $[C_{11}F_{23}COO^-]M^+$ | 12 | 613 | 569 |
| $[C_{12}F_{25}COO^-]M^+$ | 13 | 663 | 619 |

(continued)

Table 3 MRM measurement parameter

| Compound | Number of carbon atoms | Precursor | Product |
|---|---|---|---|
| $[C_{13}F_{27}COO^{-}]M^{+}$ | 14 | 713 | 669 |

(Production Example 1)

Tetrafluoroethylene was suspension-polymerized by the method described in Production Example 3 of International Publication No. WO 2003/035724. That is to say, a 170 L autoclave equipped with a stainless steel stirring blade and a temperature-controlling jacket was charged with 54.8 L of deionized water and 3.3 g of ammonium carbonate, and hermetically sealed. The contents were stirred at 110 rpm while being heated to 70°C, and the autoclave was purged with nitrogen. The oxygen concentration in the autoclave was 10 ppm by volume. The pressure was reduced to remove nitrogen, 85 g of perfluoro(propyl vinyl ether) (PPVE) was introduced using tetrafluoroethylene, and the pressure was increased using tetrafluoroethylene to a pressure of 0.8 MPaG. Polymerization was initiated by adding ammonium persulfate as a polymerization initiator. Polymerization was carried out by continuously adding tetrafluoroethylene so as to maintain a pressure of 0.8 MPaG until 22.5% by mass of tetrafluoroethylene was consumed based on the weight of the aqueous medium, and then the monomer was released without stopping the stirring.

(Example 1)

After releasing the monomer, the autoclave was promptly purged with nitrogen gas to create a reduced pressure state, and the pressure was increased from the reduced pressure state (-0.08 MPaG) to 0.02 MPaG with air, and stirring was performed at 40°C for 20 minutes. The amount of dissolved oxygen (a calculated value) at this time was 0.76 mg/L, and the amount of dissolved oxygen (a measured value) was 7.7 mg/L. The power number of the stirring was 0.5.

The stirring was stopped, the autoclave was opened, the resulting aqueous medium containing suspension-polymerized polytetrafluoroethylene particles was removed, the liquid was drained, and the particles were washed twice with pure water. Simultaneously with washing, the particles were pulverized using a high-speed tumbling mill to give pulverized particles. After drying, pulverization was carried out with an air jet mill to give polytetrafluoroethylene powder. The results of physical property evaluation are shown in Tables 4 and 5.

(Comparative Example 1)

Polytetrafluoroethylene powder was obtained in the same manner as in Example 1 except that nitrogen gas was used in place of air to increase the pressure from the reduced pressure state. The amount of dissolved oxygen (a calculated value and a measured value) at this time was 0.0 mg/L. The results of physical property evaluation are shown in Tables 4 and 5.

[Table 4]

Table 4

| | Apparent density [g/ml] | SSG | 50% diameter [μm] | PPVE [mass%] | ΔPPVE [mass%] |
|---|---|---|---|---|---|
| Example 1 | 0.36 | 2.151 | 23.1 | 0.080 | 0.009 |
| Comparative Example 1 | 0.36 | 2.151 | 22.4 | 0.080 | 0.007 |

[Table 5]

Table 5

| | Content of compound represented by general formula (2) [ppb by mass/PTFE] |
|---|---|
| Example 1 | 29 |
| Comparative Example 1 | 111 |

(Example 2)

After releasing the monomer, the autoclave was promptly purged with nitrogen gas to create a reduced pressure state, and the pressure was increased from the reduced pressure state (-0.08 MPaG) to -0.06 MPaG with air, and stirring was performed at 50°C for 20 minutes. The power number of the stirring was 0.5. Thereafter, stirring was terminated, and the mixture was left to stand still in the reactor for 120 minutes. The amount of dissolved oxygen (a measured value) at this time was 2.2 mg/L.

The same operation as in Example 1 was performed to give polytetrafluoroethylene powder. The results of physical property evaluation are shown in Tables 6 and 7.

(Example 3)

The same operation as in Example 2 was performed except that the pressure was increased to 0.06 MPaG instead of increasing the pressure to -0.06 MPaG with air. The amount of dissolved oxygen (a measured value) after being left to stand still was 8.9 mg/L.

The same operation as in Example 1 was performed to give polytetrafluoroethylene powder. The results of physical property evaluation are shown in Tables 6 and 7.

(Example 4)

The same operation as in Example 1 was performed except that the stirring was performed at 40°C for 5 minutes instead of stirring at 40°C for 20 minutes and, after stirring was stopped, the mixture was allowed to stand still in the reactor for 60 minutes. The amount of dissolved oxygen (a measured value) after being left to stand still was 7.7 mg/L.

The same operation as in Example 1 was performed to give polytetrafluoroethylene powder. The results of physical property evaluation are shown in Tables 6 and 7.

(Production Example 2)

Emulsion polymerization of tetrafluoroethylene was performed according to the description in Production Example 2 of International Publication No. WO 2022/050430. That is to say, 3,580 g of deionized water, 160 g of paraffin wax, and 4.7 g of a fluorine-containing surfactant were added to an SUS reactor having an internal volume of 6 L and equipped with a stirrer. Then, the contents of the reactor, while being heated to 70°C, were suctioned and at the same time purged with TFE to remove oxygen in the reactor, and were stirred. The oxygen concentration in the autoclave was 10 ppm by volume. The reactor was charged with 6.5 g of PPVE using TFE. As an initiator, 50 mg of ammonium persulfate dissolved in 20 g of deionized water was added to the reactor, and the pressure was set to 1.5 MPaG. TFE was added such that the pressure was constant at 1.5 MPaG. When the amount of TFE consumed in the reaction reached 1,543 g, the feeding of TFE was stopped, the stirring was stopped to terminate the reaction, and the monomer was released.

(Example 5)

After releasing the monomer, the reactor was promptly purged with nitrogen gas to create a reduced pressure state, and the pressure was increased from the reduced pressure state (-0.08 MPaG) to 0.00 MPaG with air, and stirring was again performed at 70°C for 5 minutes. The power number of the stirring was 0.3. Thereafter, stirring was terminated, and the mixture was left to stand still in the reactor for 60 minutes. The amount of dissolved oxygen (a measured value) at this time was 3.0 mg/L.

The autoclave was opened, and an aqueous dispersion of polytetrafluoroethylene was obtained. Deionized water was added to the resulting aqueous dispersion such that the solid concentration was 15% by mass, and high-speed stirring was performed for coagulation, followed by washing twice with deionized water to give wet particles. The resulting wet powder was dried at 150°C for 18 hours to give polytetrafluoroethylene powder. The results of physical property evaluation are shown in Tables 6 and 7.

[Table 6]

Table 6

| | SSG [ - ] | PPVE [mass%] | ΔPPVE [mass%] |
|---|---|---|---|
| Example 2 | 2.151 | 0.08 | 0.009 |
| Example 3 | 2.152 | 0.08 | 0.008 |
| Example 4 | 2.150 | 0.08 | 0.007 |
| Example 5 | 2.168 | 0.19 | 0.010 |

[Table 7]

Table 7

| | Content of compound represented by general formula (2) [ppb by mass/PTFE] |
|---|---|
| Example 2 | 34 |
| Example 3 | 39 |
| Example 4 | 28 |
| Example 5 | 38 |

## Claims

**1.** A method for producing a fluoropolymer, the method comprising:

polymerizing a fluoromonomer in the presence of a polymerization initiator and an aqueous medium in a reactor to prepare a composition containing the aqueous medium and the fluoropolymer, and
bringing the composition into contact with a gas containing at least oxygen.

**2.** The production method according to claim 1,
wherein an amount of dissolved oxygen in the composition is 0.001 mg/L or more when bringing the composition into contact with the gas.

**3.** The production method according to claim 1 or 2, wherein an oxygen concentration in a gas phase in the reactor is regulated to 20 ppm by volume or less when polymerizing the fluoromonomer.

**4.** The production method according to any one of claims 1 to 3, wherein a temperature of the composition is regulated to 30°C or higher when bringing the composition into contact with the gas.

**5.** The production method according to any one of claims 1 to 4, wherein a temperature of the composition is regulated to 85°C or lower when bringing the composition into contact with the gas.

**6.** The production method according to any one of claims 1 to 5, wherein bubbles are created in the composition by stirring the composition when bringing the composition into contact with the gas.

**7.** The production method according to any one of claims 1 to 6, wherein the composition is stirred at a power number of 0.3 or more when bringing the composition into contact with the gas.

**8.** The production method according to any one of claims 1 to 7, wherein the time of contact between the composition and the gas is one minute or longer.

**9.** The production method according to any one of claims 1 to 8, wherein after preparing the composition, the fluoromonomer is removed from the reactor, and then the gas is fed to the reactor.

**10.** The production method according to any one of claims 1 to 9, wherein the composition is prepared by polymerizing the fluoromonomer while stirring the aqueous medium, and the composition is brought into contact with the gas while stirring the composition at a stirring speed of -80% or more to +50% or less relative to the stirring speed during the polymerization.

**11.** The production method according to any one of claims 1 to 10, wherein the fluoromonomer comprises at least tetrafluoroethylene.

**12.** The production method according to any one of claims 1 to 11, wherein the fluoromonomer comprises at least a perfluoro(alkyl vinyl ether).

**13.** The production method according to any one of claims 1 to 12, wherein the fluoropolymer is at least one selected from the group consisting of a polytetrafluoroethylene, a tetrafluoroethylene/hexafluoropropylene copolymer, a tetrafluoroethylene/hexafluoropropylene/perfluoro(alkyl vinyl ether) copolymer, and a tetrafluoroethylene/perfluoro(alkyl vinyl ether) copolymer.

**14.** The production method according to any one of claims 1 to 13, wherein the fluoropolymer is washed after bringing the composition into contact with the gas.

**15.** The production method according to any one of claims 1 to 14, wherein the fluoropolymer is dried after bringing the composition into contact with the gas.

**16.** The production method according to any one of claims 1 to 15, wherein the fluoropolymer is pulverized after bringing the composition into contact with the gas.

**17.** The production method according to any one of claims 1 to 16, wherein the fluoropolymer is formed into a pellet after bringing the composition into contact with the gas.

**18.** The production method according to claim 1, wherein

the polymerization initiator is a persulfate;
the fluoromonomer comprises at least tetrafluoroethylene and a perfluoro(alkyl vinyl ether);
the fluoropolymer is a modified polytetrafluoroethylene, and a total amount of a perfluoro(alkyl vinyl ether) unit in the modified polytetrafluoroethylene is 0.00001 to 1% by mass based on all polymerization units of the modified polytetrafluoroethylene;
an oxygen concentration in a gas phase in the reactor is regulated to 20 ppm by volume or less when polymerizing the fluoromonomer;
after preparing the composition, the fluoromonomer in the reactor is replaced with an inert gas, then the gas containing at least oxygen is fed to the reactor, the composition in the reactor is stirred at a power number of 0.3 or more, and the composition is brought into contact with the gas at 30 to 50°C for 15 minutes or longer to thereby regulate an amount of dissolved oxygen in the composition to 0.50 mg/L or more; and
after bringing the composition into contact with the gas, the fluoropolymer is washed, and the washed fluoropolymer is dried to give a powder of the modified polytetrafluoroethylene.

**19.** A powder of a modified polytetrafluoroethylene, wherein

the modified polytetrafluoroethylene has an amount of ΔPPVE of 0.002% by mass or more, and
a content of a fluorine-containing compound having a hydrophilic group, which is represented by general formula (2), is 100 ppb by mass or less based on the mass of the modified polytetrafluoroethylene:

General formula (2): $[C_{n-1}F_{2n-1}COO^-]M^+$

wherein n is an integer of 9 to 14, and $M^+$ represents a cation.

## INTERNATIONAL SEARCH REPORT

International application No.
**PCT/JP2024/035013**

**A. CLASSIFICATION OF SUBJECT MATTER**

***C08F 2/16***(2006.01)i; ***C08F 2/00***(2006.01)i; ***C08F 6/10***(2006.01)i; ***C08F 14/26***(2006.01)i; ***C08F 16/24***(2006.01)i
FI: C08F2/16; C08F2/00 Z; C08F6/10; C08F14/26; C08F16/24

According to International Patent Classification (IPC) or to both national classification and IPC

**B. FIELDS SEARCHED**

Minimum documentation searched (classification system followed by classification symbols)

C08F2/16; C08F2/00; C08F6/10; C08F14/26; C08F16/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/163814 A1 (DAIKIN INDUSTRIES, LTD.) 04 August 2022 (2022-08-04) claims, examples | 1-8, 10-13, 15 |
| A | entire text | 9, 14, 16-19 |
| X | JP 2023-123689 A (DAIKIN INDUSTRIES, LTD.) 05 September 2023 (2023-09-05) claims, paragraph [0098], examples | 1-8, 10-16, 19 |
| A | entire text | 9, 17-18 |
| X | JP 2023-82204 A (DAIKIN INDUSTRIES, LTD.) 13 June 2023 (2023-06-13) claims, paragraph [0043], examples | 1-8, 10-17, 19 |
| A | entire text | 9, 18 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/035013**

| Patent document cited in search report | Publication date (day/month/year) | Patent family member(s) | Publication date (day/month/year) |
|---|---|---|---|
| WO 2022/163814 A1 | 04 August 2022 | US 2023/0348636 A1<br>claims, examples<br>EP 4286425 A1<br>CN 116761828 A | |
| JP 2023-123689 A | 05 September 2023 | US 2022/0275237 A1<br>claims, paragraph [0077], examples<br>EP 4026854 A1<br>CN 114341209 A | |
| JP 2023-82204 A | 13 June 2023 | EP 4039716 A1<br>claims, paragraph [0072], examples<br>CN 114514253 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S48034399 B
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531
- WO 2013189824 A
- WO 2013189826 A
- WO 2019161153 A
- JP 2005527652 W
- WO 2012002038 A
- JP 11049912 A
- US 5804654 A
- JP 11029679 A
- JP 2003002980 A
- JP 2827152 B
- JP 2538783 B
- WO 2007004250 A
- WO 2007000812 A
- JP 10147617 A
- WO 2007013532 A
- WO 2014175123 A
- WO 2003035724 A
- WO 2022050430 A